# EUROPEAN PATENT SPECIFICATION

(11) **EP 3 602 020 B1**
(45) Date of publication and mention of the grant of the patent: **27.12.2023**
(21) Application number: 18771876.2
(22) Date of filing: 21.03.2018
(51) Int. Cl.: G01N 23/085, G21K 1/06, H01J 35/12, H01J 9/14, H01J 35/02, H01J 35/10

(54) **METHOD OF PERFORMING X-RAY SPECTROSCOPY AND X-RAY ABSORPTION SPECTROMETER SYSTEM**
VERFAHREN ZUR DURCHFÜHRUNG VON RÖNTGENSPEKTROSKOPIE UND RÖNTGENABSORPTIONSSPEKTROMETERSYSTEM
PROCÉDÉ DE RÉALISATION D'UNE SPECTROSCOPIE DES RAYONS X ET SYSTÈME DE SPECTROMÈTRE D'ABSORPTION DE RAYONS X

(30) Priority: 22.03.2017 US 201762475213 P
(43) Date of publication of application: 05.02.2020
(73) Proprietor: Sigray Inc., Concord, CA 94520 (US)
(72) Inventor: YUN, Wenbing, Concord, CA 94520 (US); LEWIS, Sylvia Jia Yun, Concord, CA 94520 (US); KIRZ, Janos, Concord, CA 94520 (US); SESHADRI, Srivatsan, Concord, CA 94520 (US); LYON, Alan Francis, Concord, CA 94520 (US); STRIPE, Benjamin Donald, Concord, CA 94520 (US)
(74) Representative: Marks & Clerk LLP
(86) International application number: PCT/US2018/023547
(87) International publication number: WO 2018/175570

(56) References cited:
- WO-A1-2015/187219
- US-A1- 2008 165 355
- US-A1- 2011 064 191
- US-A1- 2011 268 252
- US-A1- 2013 108 022
- US-A1- 2015 357 069
- US-B1- 7 796 726
- GAUR ABHIJEET ET AL: "On the method of calibration of the energy dispersive EXAFS beamline at Indus-2 and fitting theoretical model to the EXAFS spectrum", SADHANA., vol. 36, no. 3, 1 June 2011 (2011-06-01), pages 339-348, XP055815752, IN ISSN: 0256-2499, DOI: 10.1007/s12046-011-0021-9 Retrieved from the Internet: URL:https://link.springer.com/content/pdf/ 10.1007/s12046-011-0021-9.pdf>
- ZOLT\'AN N\'EMETH ET AL: "Laboratory von Hamos X-ray Spectroscopy for Routine Sample Characterization", ARXIV.ORG, CORNELL UNIVERSITY LIBRARY, 201 OLIN LIBRARY CORNELL UNIVERSITY ITHACA, NY 14853, 27 July 2016 (2016-07-27), XP080715214,
- ANKLAMM LARS ET AL: "A novel von Hamos spectrometer for efficient X-ray emission spectroscopy in the laboratory", REVIEW OF SCIENTIFIC INSTRUMENTS, AIP, MELVILLE, NY, US, vol. 85, no. 5, 26 May 2014 (2014-05-26), XP012185964, ISSN: 0034-6748, DOI: 10.1063/1.4875986 [retrieved on 1901-01-01]

## Description

### BACKGROUND

### Field of the Invention

The embodiments of the invention disclosed herein relate to a method performing x-ray spectroscopy and an x-ray spectrometry systems having an x-ray illumination system comprising a focusing x-ray optic with an energy bandwidth greater than 10 eV that collects x-rays from the laboratory source and focuses portion of the collected x-rays on or near an object with a focus size less than 500 micrometers. In many embodiments, the focus spot is <10-20 um. Various embodiments of the spectrometer may have a variety of x-ray materials and optical elements to provide a variety of x-ray bandwidth ranges suitable for a variety of x-ray spectroscopy applications.

### Discussion of Background

### 1. Introduction.

Measurement of the x-ray absorption properties of a material, especially near the ionization energy, can reveal information about the composition and chemical state of the material. X-ray absorption spectroscopy (XAS) is a technique commonly employed at high brightness synchrotron light sources for chemical analysis, but has been limited in its application at the laboratory due to a combination of the long acquisition times needed and poor spectral resolution of laboratory systems. To this end, a laboratory XAS system is described with significant innovations to increase the flux of x-rays at specific energies and achieve high spectral resolution to would allow better analysis of the absorption fine structure associated with the absorption edge.

To create such capabilities using laboratory x-ray sources, a new approach to x-ray absorption spectroscopy is required.

### 1.1 X-ray Source

Often laboratory sources of x-rays are created by bombarding an anode target having a selected x-ray generating material with electrons accelerated through a potential (measured in keV) in a vacuum. With the collision of the electrons and the material, there are several energy transfer mechanisms that can occur, including heat and the generation of x-rays. A spectrum of x-rays is produced with x-ray energies up to the original electron energy (in this example, about 50 KeV) which includes characteristic x-rays and continuum, often referred to as Bremsstrahlung radiation. Ways to increase the brightness of the x-ray source is to increase the energy of the electrons by raising the accelerating voltage, use a target material with a higher atomic number Z, and/or to increase the electron density bombarding the material. However, this is generally limited by the ability of the material to absorb energy without melting or damage. Therefore, most current art electron bombardment x-ray sources comprise a single x-ray radiating material with good thermal properties, such as a high melting point and high thermal conductivity. The target material may also be mounted onto, or embedded into, a substrate having properties selected to efficiently conduct heat away from the x-ray generating material, with the thickness of the x-ray generating material limited by the electron penetration depth.

### 1.2 X-ray Focusing Optics.

X-rays generated by electron beam bombardment generally radiate in all directions and x-ray flux density on a sample for a given analysis area can be increased through the use of optics. For XAS measurement, the focusing optic needs to work for an energy bandwidth. In XAS embodiments thus far developed, x-ray optics have generally not used and instead a microfocus x-ray source is used.

### 1.3 X-ray Absorption Spectrometer.

X-ray absorption spectroscopy (XAS) typically measures the fraction of x-rays absorbed by an object as a function of x-ray energy over a predetermined energy range with energy resolution better than 10 eV, inclusive an absorption edge of an element in the object. It is often carried out at synchrotron light sources because of their high brightness and easy energy tunability. Small laboratory-based x-ray absorption spectroscopy systems would provide easy access and full control; however the performance of laboratory XAS systems has been largely limited by a combination of many factors, including low brightness of the Bremsstrahlung radiation of laboratory x-ray sources, low diffraction efficiency of the crystal analyzer associated with the use of high index reflections, and non-optimal spectrometer design. Those limitations often result in unacceptably long acquisition times (~up to tens of hours) and/or poor energy resolution. As a consequence, there are few laboratory systems in use.

The following four documents disclose existing x-ray spectroscopy systems and methods that provide background to the present disclosure:
- GAUR ABHIJEET ET AL: "On the method of calibration of the energy dispersive EXAFS beamline at Indus-2 and fitting theoretical model to the EXAFS spectrum", SADHANA., vol. 36, no. 3, 1 June 2011 (2011-06-01), pages 339-348, XP055815752, IN, ISSN: 0256-2499, DOI: 10.1007/s12046-011-0021-9
- ZOLTVAN NVEMETH ET AL: "Laboratory von Hamos X-ray Spectroscopy for Routine Sample Characterization", ARXIV.ORG, CORNELL UNIVERSITY LIBRARY, 201 OLIN LIBRARY CORNELL UNIVERSITY ITHACA, NY 14853, 27 July 2016 (2016-07-27), XP080715214,
- ANKLAMM LARS ET AL: "A novel von Hamos spectrometer for efficient X-ray emission spectroscopy in the laboratory", REVIEW OF SCIENTIFIC INSTRUMENTS, AIP, MELVILLE, NY, US, vol. 85, no. 5, 26 May 2014 (2014-05-26), XP012185964, ISSN: 0034-6748, DOI: 10.1063/1.4875986
- US 2015/357069 A1

A recently developed in-laboratory system uses spherically bent crystal analyzers to achieve sufficiently high energy resolution for XANES measurement [Seidler, G. T., et al. "A modern laboratory XAFS cookbook." Journal of Physics: Conference Series. Vol. 712. No. 1. IOP Publishing, 2016]. However, that system has several limitations including: there is no focusing optic between the source and object, resulting in low x-ray flux density on the object;need of a large illuminated area to obtain sufficient x-ray flux on the object; as a consequence of the large illuminated area, crystal analyzers need to operate at high Bragg angles to achieve adequate energy resolution; because x-ray energy range for a crystal analyzer operating at high Bragg angles is typically limited to a narrow operating energy range, a large number of crystal analyzers are required for the spectrometer to operate over a sufficiently wide energy bandwidth; because a crystal analyzer operating at high Bragg angles typically reflects an energy bandwidth significantly narrower than the energy resolution required for XAS measurement, it leads to significant loss in measurement throughput. Additionally, XAS measurement is typically performed by scanning x-ray energy point by point.

There is therefore a need for a laboratory x-ray absorption spectroscopy system with high throughput that circumvents the limitations of prior laboratory XAS systems.

### BRIEF SUMMARY OF THE INVENTION

Presented in this Application is a method and systems for performing x-ray absorption spectroscopy measurement and an x-ray absorption spectrometer to measure x-ray transmission with high throughput, high spatial, and high spectral resolution.

### Apparatus

The disclosed x-ray absorption spectrometer comprises a laboratory x-ray source, and an optical train which focuses x-rays over an energy bandwidth greater than 10 eV emerging from the x-ray source on or near an object to be examined with an focus size less than 500 micrometers. The benefits of the optical train include high x-ray flux on the sample and small illuminated spot for analyzing a small area (high spatial resolution) and use of crystal analyzers with low Bragg angles for high throughput, and compactness of the spectrometer. Additionally, it may also serves as a low-pass filter with a predetermined high-energy cut-off for the x-rays. The benefit of using an optical train that has properties enabling it to serve as low-pass focusing reflector is that the x-ray production efficiency of the x-ray source can be increased by enabling the energy of the bombarding electrons in the x-ray source to be substantially higher.

The x-ray optical elements in the train may comprise capillary x-ray optics, including reflecting surface profiles that correspond to one or more portions of quadric functions such as paraboloids, ellipsoids, or Wolter-type (e.g. paraboloidal and hyperboloidal profiles). Optical elements include but are not limited to x-ray mirror optics based on total external reflection. For an x-ray of incident at an angle ϑ onto a surface of a material with atomic number Z, the reflectivity is nearly 100% for near-grazing angles (e.g. ϑ ≈ 0º), and falls off for angles larger than a material-dependent and x-ray energy dependent critical angle ϑ*_{c}*. Critical angles are typically smaller than 2°, limiting the acceptance angle for most x-ray optical systems.

In some cases where a narrow energy bandwidth is sufficient for XAS measurement, focusing multilayer optics such as Montel Optics may be used.

In some embodiments, the higher brightness compact x-ray source is achieved in part through the use of novel x-ray targets used in generating x-rays from electron beam bombardment. These x-ray target configurations may comprise a number of microstructures of one or more selected x-ray generating materials fabricated in close thermal contact with (such as embedded in or buried in) a substrate with high thermal conductivity, such that the heat is more efficiently removed from the x-ray generating material. This in turn allows bombardment of the x-ray generating material with higher electron density and/or higher energy electrons, which leads to greater x-ray brightness and greater x-ray flux.

An object to be examined is placed in the path of the focused x-ray beam, and an aperture may be placed at or near the point of focus to selectively pass the transmitted x-rays while restricting the widely radiated x-ray fluorescence. The object may be translated in the plane perpendicular with respect to the x-ray beam to allow 2-D "map" of the transmitted spectrum to be collected or rotated about its axis with or without translation so that 3D tomography of the transmission spectrum can be collected.

The x-ray absorption spectroscopy system comprises also at least one spatially resolved x-ray detector. The crystal analyzer is positioned to receive and diffract the x-rays transmitting through the object onto an spatially resolving detector, aligned so that different pixels of the detector correspond to different x-ray wavelengths.

### BRIEF DESCRIPTION OF THE DRAWINGS

FIGURE 1 illustrates a schematic cross-section view of elements of an embodiment of an x-ray spectrometer according to the invention.
FIGURE 2 illustrates a portion of a target comprising a single block of x-ray generating material as may be used in some embodiments of the invention. As drawn, the x-rays 1488 emerge at a zero take-off angle relative to the surface, but other alignments using a non-zero-degree take-off angle may be used as well.
FIGURE 3 illustrates a top view of a target having multiple wire microstructures.
FIGURE 4 illustrates a portion of a target comprising a several microstructures of x-ray generating material as may be used in some embodiments of the invention.
FIGURE 5A illustrates a cross-section schematic view of an x-ray target generating x-rays as may be used in some embodiments of the invention.
FIGURE 5B illustrates a perspective schematic view of the x-ray target and x-ray radiation of FIGURE 5A.
FIGURE 5C illustrates more detailed cross-section schematic view of the x-ray target and x-ray radiation of FIGURE 5A.
FIGURE 6 illustrates a portion of a target comprising two groups of microstructures, each having a different x-ray generating material, as may be used in some embodiments of the invention.
FIGURE 7 illustrates a portion of a target comprising three x-ray generating structures, each having a different x-ray generating material, as may be used in some embodiments of the invention.
FIGURE 8A illustrates a cross section schematic view of an x-ray source and an optical train comprising an ellipsoidal optical element as may be used in some embodiments of the invention.
FIGURE 8B illustrates a perspective schematic view of a portion of an x-ray source and optical train.
FIGURE 9A illustrates a cross section schematic view of an x-ray source and an optical train comprising a pair of paraboloidal optical elements.
FIGURE 9B illustrates a perspective schematic view of a portion of an x-ray source and optical train.
FIGURE 10 illustrates a cross section schematic view of a spectrometer system using a single analyzer crystal.
FIGURE 11 illustrates a cross section schematic view of a spectrometer portion.
FIGURE 12 illustrates a schematic view of a spectrometer arranged to show related Rowland Circles.
FIGURE 13A-13D illustrate schematic views of disclosed spectrometers.
FIGURE 14 illustrates a perspective schematic view of a spectrometer system having multiple options for x-ray source, optical train, aperture, and analyzer crystal position.
FIGURE 15 illustrates a flowchart of a method for obtaining x-ray absorption spectroscopy information.

### DETAILED DESCRIPTIONS OF EMBODIMENTS OF THE INVENTION

### 1. A Basic Embodiment of the Invention.

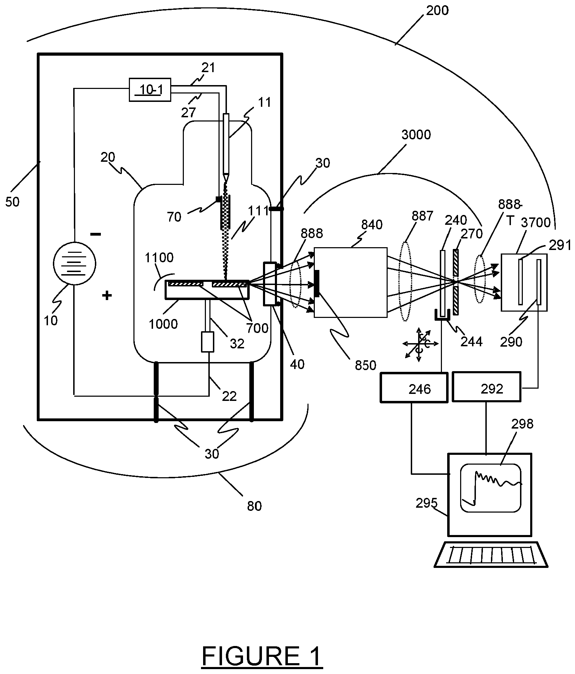

FIGURE 1 illustrates an embodiment of an x-ray spectrometer system 200 comprising an x-ray source 80, an x-ray optical system 3000 that includes an object 240 to be examined by x-ray transmission, also referred to as a sample by those skilled in the art, a spectrometer 3700 comprising a detector 290 and a crystal 291, and signal processing electronics 292 and an analysis system 295 with a display 298. The object 240 to be examined will also be referred to as the sample hereinafter.

The source 80 comprises a vacuum environment (typically 1.333 10⁻⁶ mbar (10⁻⁶ Torr) or better) commonly maintained by a sealed vacuum chamber 20 or active pumping, and manufactured with sealed electrical leads 21 and 22 that pass from the negative and positive terminals of a high voltage source 10 outside the tube to the various elements inside the vacuum chamber 20. The source 80 will typically comprise mounts 30 which secure the vacuum chamber 20 in a housing 50, and the housing 50 may additionally comprise shielding material, such as lead, to prevent x-rays from being radiated by the source 80 in unwanted directions.

Inside the vacuum chamber 20, an electron emitter 11 connected through the lead 21 to the negative terminal of a high voltage source 10, which serves as a cathode and generates a beam of electrons 111. Any number of prior art techniques for electron beam generation may be used for the embodiments of the invention disclosed herein, such as thermionic emission, field emission, Schottky emission, emitters comprising nanostructures such as carbon nanotubes), and by use of ferroelectric materials.

A target 1100 comprising a target substrate 1000 and one or more x-ray generating structure(s) 700 comprising one or more x-ray generating materials is electrically connected to the opposite high voltage lead 22 and target support 32 to be at ground or a positive voltage relative to the electron emitter 11, thus serving as an anode. The electrons 111 accelerate towards the target 1100 and collide with it at high energy, with the energy of the electrons determined by the magnitude of the accelerating voltage. The collision of the electrons 111 into the target 1100 induces several effects, including the radiation of x-rays 888, some of which exit the vacuum chamber 20 and are transmitted through a window 40 transmissive to x-rays.

In some instances of the invention, there may also be an electron control mechanism 70 such as an electrostatic lens system or other system of electron optics that is controlled and coordinated with the electron dose and voltage provided by the electron emitter 11 by a controller 10-1 through an additional lead 27. The electron beam 111 may therefore be scanned, focused, de-focused, or otherwise directed onto target 1100 comprising one or more x-ray generating structures 700 fabricated to be in close thermal contact with a substrate 1000.

Once the x-rays 888 exit the x-ray source 80, a portion of the x-rays are collected by optical system 3000, typically comprising one or more optical trains 840. In some embodiments, the optical trains comprise x-ray optical elements with axial symmetry such as capillary optics. The elements of the optical train 840 reflect x-rays at grazing angles to focus a portion 887 of the x-rays onto a focal spot. In many instances, an aperture component 270 having one or more apertures 272 is coincident with the focal spot. The object 240 to be examined is typically placed in a mount 244 and positioned just before the aperture 272. The mount may allow the object 240 to be translated and/or rotated so that different portions of the object 240 are illuminated by the converging x-rays 887, allowing different positions on the object 240 to be illuminated in a systematic scan or from several angles of incidence, with this motion controlled by a controller 246. X-rays propagating along the axis of the optical train that are not collected and focused may be blocked by a beam stop 850.

Once the focused portion of the x-rays 887 converge onto the object 240, the transmitted x-rays 888-T are collected by a spectrometer 3700. The spectrometer 3700 typically comprises at least one dispersing x-ray crystal 291 and an x-ray detector 290. In some instances, the distance between the apparent source of x-rays on the sample and the at least one analyzer crystal is less than two (2) meters. The detector 290 will typically be an array detector, positioned to record the intensity of the dispersed x-rays as a function of position. Additional signal processing electronics 292 and analysis system 295 correlate the intensity signals to the corresponding x-ray energy. The analysis system 295 may additionally comprise a display 298. The detector 290 may also comprise sensors and electronics that serve as an x-ray spectrometer, analyzing both the number of x-ray fluorescence photons emerging from the object 240 as well as their energy.

An x-ray optical train is placed downstream of the x-ray source to collect and focus a portion of the x-rays generated by the x-ray source. The x-ray optic has a cut-off energy above which x-ray reflection is reduced to 30% or less. The use of this optic enables the operation of the x-ray source at higher accelerating voltages that significantly increase efficient generation of bremsstrahlung radiation. In prior art, laboratory x-ray sources have been limited to operation of less than 2X the characteristic energy of interest of the element under examination, because of potential contamination from multiple order diffraction. In some instances, the x-ray optical train comprises at least one capillary x-ray optic with an inner surface profile that corresponds one or more portions of a quadric function, such as an ellipsoid, paraboloid, or a Wolter-type (paraboloid and ellipsoid/hyperboloid). In some instances, the x-ray optic may be a Montel mirror or other x-ray optics known to those versed in the art. In some instances, the optic may be coated with a coating such as a multilayer coating or a high atomic element (e.g. atomic number greater than 26) or alloy, such as Platinum.

The focal point of the x-ray optical train serves as a secondary source for a spectrometer comprising one or more crystals. Such spectrometers are described herein and comprise at least one x-ray crystal and one x-ray detector.

### 2. X-ray Source Spectrum.

As was shown in FIGURE 1, the x-ray source 80 will typically have a window 40. This window 40 may attenuate low energy x-rays. This window and/or the optical train may additionally comprise a filter, that such as a sheet or layer of aluminum, to further attenuate low energy x-rays.

If the optical train comprises one or more x-ray optical elements in which the x-rays illuminate the inner surface of the element at a near-grazing angle (e.g. at angles of a few degrees or smaller), the critical angle will be exceeded for the higher energy x-rays, and they will not be reflected. Thus, such optics have a "high-energy cutoff' for reflection. The "high-energy" cutoff is well defined for a given material and critical angle, and the attenuation of high energy x-rays prevents spurious signals coming from higher harmonics (e.g. twice (2x) the energy) from being observed downstream in the spectrometer. However, additional structure in the reflectivity spectrum may be observed at high energy with some materials. For some x-ray reflective optics, the reflectivity may be designed to be below 25% for all energies greater than 1.2 times the cutoff energy. For some x-ray reflective optics, the reflectivity may be designed to be below 10% for all energies greater than 1.2 times the cutoff energy.

### 3. Structured X-ray Source.

Any number of x-ray sources known to those versed in the art may be used, such as commercial microfocus sources or rotating anode sources. In some preferred embodiments, x-ray sources comprising targets of multiple "wires" of x-ray materials in close thermal contact with a thermally conductive substrate are used. This may be achieved by any number of methods known in the art, such as sputtering or by brazing multiple materials upon a substrate. The electron beam and target may be moved relative to each other such that different target materials are bombarded and produce different spectra. In some embodiments, the x-ray generating materials are microstructured.

Additional embodiments of x-ray sources have been described in the U.S. Patent Applications X-RAY SOURCES USING LINEAR ACCUMULATION (U.S. Patent Application 14/490,672, filed Sept. 19, 2014 and now issued as US. Patent 9,390,881), X-RAY SOURCES USING LINEAR ACCUMULATION (U.S. Patent Application 14/999,147, filed Apr. 1, 2016, and now issued as US. Patent 9,543,109), and DIVERGING X-RAY SOURCES USING LINEAR ACCUMULATION (U.S. Patent Application 15/166,274 filed May 27, 2016).

Any of the target and/or source designs and configurations disclosed in the above referenced Patents and Patent Applications may be considered for use as a component in any or all of the methods or systems disclosed herein. Such variations may include active cooling systems comprising channels that carry liquid near or into the target to remove heat. It should be noted that these illustrations are presented to aid in the understanding of the present technology, and the various elements (microstructures, surface layers, cooling channels, etc.) are not drawn to scale in these figures.

It should also be noted that the x-ray source used for various embodiments of the present technology may, as described, be a microfocus source using bombardment of a solid anode target by electrons or a target comprised of a metal layer deposited on a substrate. The target may also comprise multiple x-ray generating materials, such as stripes of sputtered materials or wires brazed on a substrate, and/or may additionally contain regions in which the x-ray generating materials are molten or liquid. Furthermore, the x-ray source may be any one of a number of other x-ray sources designed to use a liquid metal (such as a gallium liquid metal jet) as the anode. The x-ray source target material(s) is preferably selected to optimize the generation of x-rays at energies slightly above the absorption edge of a predetermined element of interest.

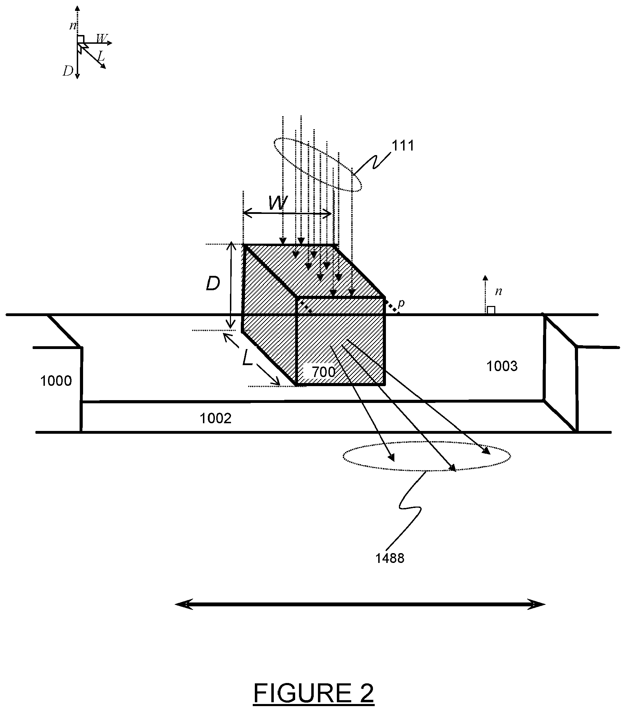

An illustration of a portion of a target as may be used in some embodiments of the invention is presented in FIGURE 2, in which an x-ray generating region comprising a single microstructure 700 is configured to be embedded into a substrate 1000 at or near a recessed edge 1003 of an optional recessed shelf 1002 near an edge of the substrate 1000. The x-ray generating microstructure 700 can be in the shape of a rectangular bar of width W, length L, and depth or thickness D that is embedded in the substrate 1000 and generates x-rays 1488 when bombarded with electrons 111. The thickness of the bar D (along the surface normal of the target) is selected to be between one third and two thirds of the electron penetration depth of the x-ray generating material at the incident electron energy. The x-ray generating material used in the target should ideally have good thermal properties. The x-ray generating material should additionally be selected for good x-ray production properties, which includes x-ray production efficiency (proportional to its atomic number) and in some cases, it may be desirable to produce a specific spectra of interest. The material of the substrate 1000 may also be chosen to have a high thermal conductivity, typically larger than 100 W/(m °C) at room temperature.

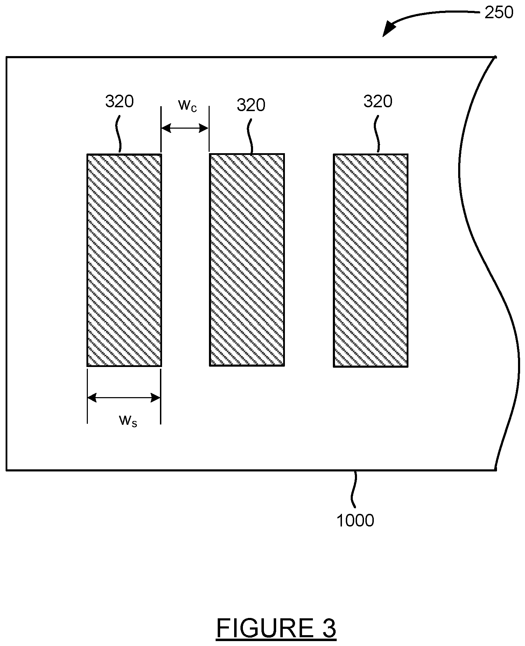

In some instances, the substrate may include one or high aspect ratio ("wire") microstructures. FIGURE 3 illustrates a top view of a target having multiple wire microstructures. Target 250 includes wire microstructures 320 and substrate 310. Spacing between the microstructures 320 may be lower bound to avoid creation of x-rays from an adjacent target when an electron-beam strikes a single target microstructure. Microstructures 320 may be any of a plurality of metals or alloys, such as Ti, Al, Cu, Cr, Fe, Mo, Rh, Co, W, Pt, Ag, and Au, and each microstructure can be a different material from other microstructures, allowing each wire 320 to generate x-rays with different spectra. In some instances, multiple wires of the same material can be implemented in the present system, to provide a longer use or lifetime of the system. Substrate 310 may be any highly thermal conductive material, such as for example diamond or copper.

The width of the space between microstructures Wc can be 15 µm (microns) or more. The width of a wire microstructure Ws can be less than or equal to 250 or 300 µm (microns). The substrate can extend longer than one or more microstructures, as shown in FIGURE 3, or may have the same length and be flush with one or more microstructures. In some instances, the wire microstructures 320 can be embedded within the substrate 1000. The embedded wires can have a cross section that is rectangular (as illustrated in FIGURE 32), curved, circular, square, or any other shape. In some instances, the target can have multiple surface mounted wire microstructures.

In some embodiments but not shown in FIGURE 32 and 33, there may be one or more layer(s) 422 between the microstructures and substrate. These may contain a material that prevents diffusion (e.g. Ta) and/or a material that improves the thermal conductance between the microstructures and substrate (e.g. Cr between Cu and diamond).

X-ray generating structures with at least one dimension smaller than 1 mm, or even as small as nano-scale dimensions (i.e. greater than 10 nm) may also be described by the word "microstructures" as used herein as long as the properties are consistent with the geometric factors for sub-source size and grating pitches set forth in the various embodiments. Some microstructures may have one dimension (e.g. L) being several millimeters or in excess of 1 cm, with the other dimensions being sub-250 um for example.

The electron beam is directed onto different target materials either by moving the anode or by directing the electron beam by the use of electron control mechanism(s). The x-ray source window is aligned such that the take-off angle of the x-rays are at fewer than 30 degrees.

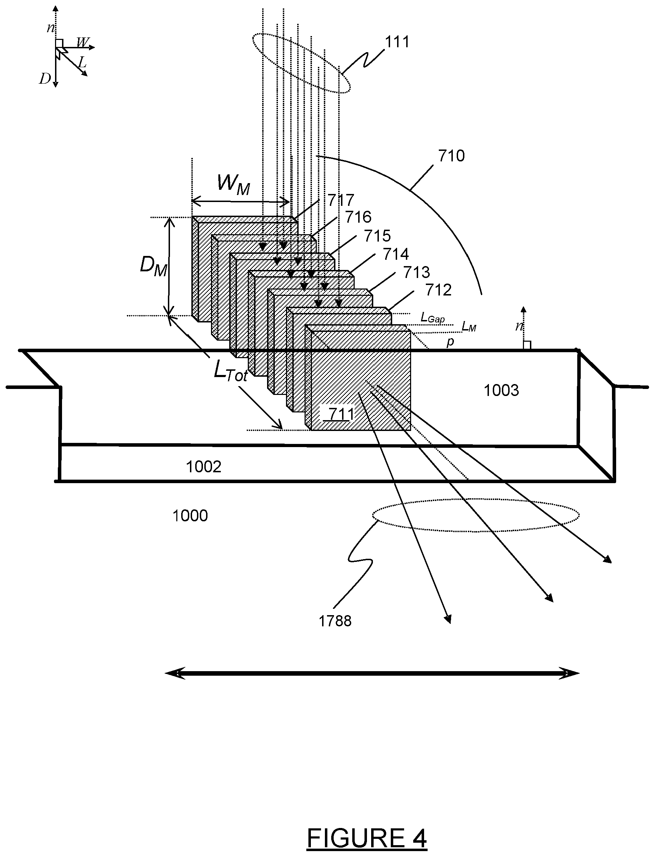

An alternative approach may be found in distributing the x-ray generating material within the substrate. An illustration of a portion of an alternative target as may be used in such embodiments of the present technology is presented in FIGURE 4. In this target, an x-ray generating region 710 with microstructures 711 - 717 is configured at or near a recessed edge 1003 of the target substrate 1000 on a shelf 1002 and generate x-rays 1788 when bombarded with electrons 111.

The bars may be embedded in the substrate (as shown) or on top of the substrate.

Other target configurations that may be used in embodiments of the invention, as has been described in the above cited US Patent Application Ser. No. 14/465,816, are microstructures comprising multiple x-ray generating materials, microstructures comprising alloys of x-ray generating materials, microstructures deposited with an anti-diffusion layer or an adhesion layer, microstructures with a thermally conducting overcoat, microstructures with a thermally conducting and electrically conducting overcoat, microstructures buried within a substrate and the like.

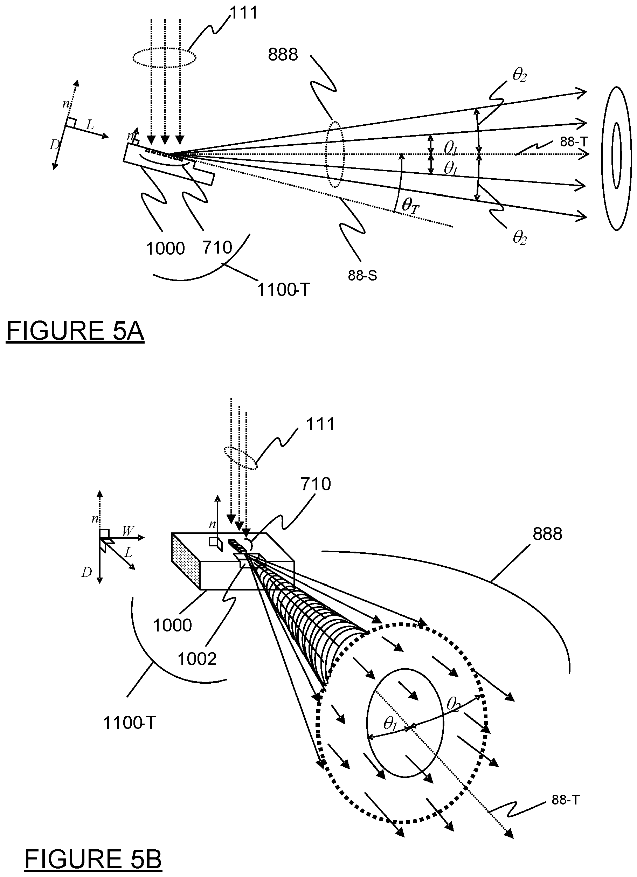

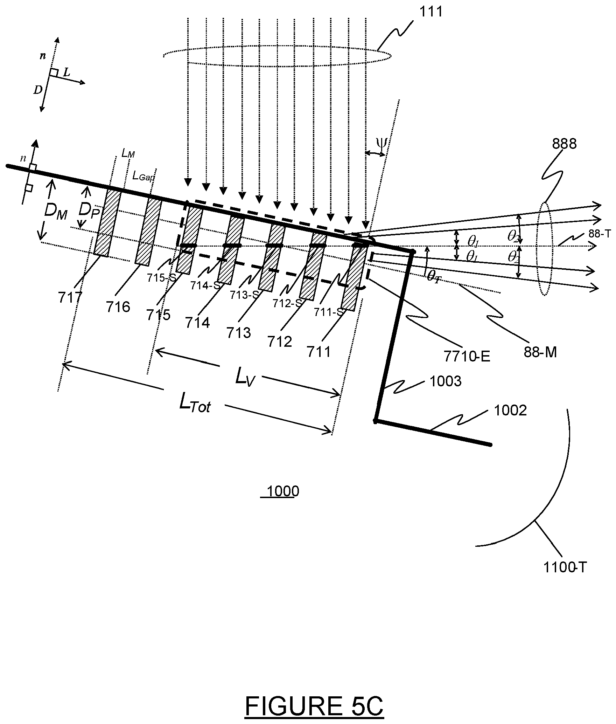

FIGURES 5A - 5C illustrate an example of a target 1100-T comprising a set 710 of microstructures of x-ray generating material 711, 712... 717 embedded within a substrate 1000, similar to the target shown in FIGURE 4. When bombarded by electrons 111 within a vacuum chamber, the x-ray generating material produces x-rays 888.

For the target as illustrated, there is furthermore a predetermined take-off direction (designated by ray 88-T) for the downstream formation of an x-ray beam. This take-off direction is oriented at an angle *θ_{T}* relative to the local surface.

As illustrated in FIGs. 5A - 5C, a predetermined set of cone angles is defined, centered around the take-off angle *θ_{T}.* A ray propagating along the innermost portion of the cone makes an angle *θ₁* with respect to the take off angle, while a ray propagating along the outermost portion of the cone makes an angle *θ₂* with respect to the take off angle. These cone angles are generally quite small (less than 50 mrad), and the take-off angle is generally between 0° to 6° (0 to 105 mrad), although in some circumstances a take off angle as large as 11.5° (~ 200 mrad) may be used.

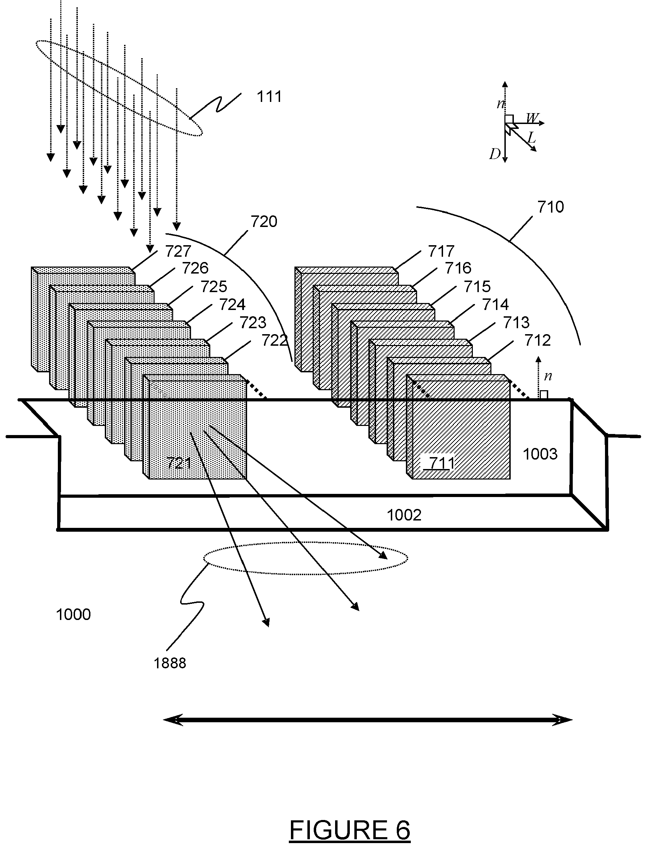

FIGURE 6 represents a portion of a target having two sets of microstructures of x-ray generating materials as may be used in an alternative implementation. In this instance, one set of microstructures 710, as before, comprises seven microstructures 711 - 717 of any material selected for the spectral x-ray radiation properties.

However, the target of FIGURE 6 also comprises a second set of microstructures 720, also comprising seven microstructures 721 - 727 of a second predetermined x-ray generating material, which is distinct from the first x-ray generating material. By translating the target or by moving the electron beam so that the electrons 111 now bombard the second set of microstructures, a second set of x-rays 1888 are produced. As drawn, the x-rays 1888 emerge at a zero degree take-off angle relative to the surface but any non-zero take-off angle may be used. If the materials of the first set 710 and second set 720 are distinct, the corresponding x-rays 1788 and 1888 generated when selected for bombardment by electrons will also have distinct spectral properties.

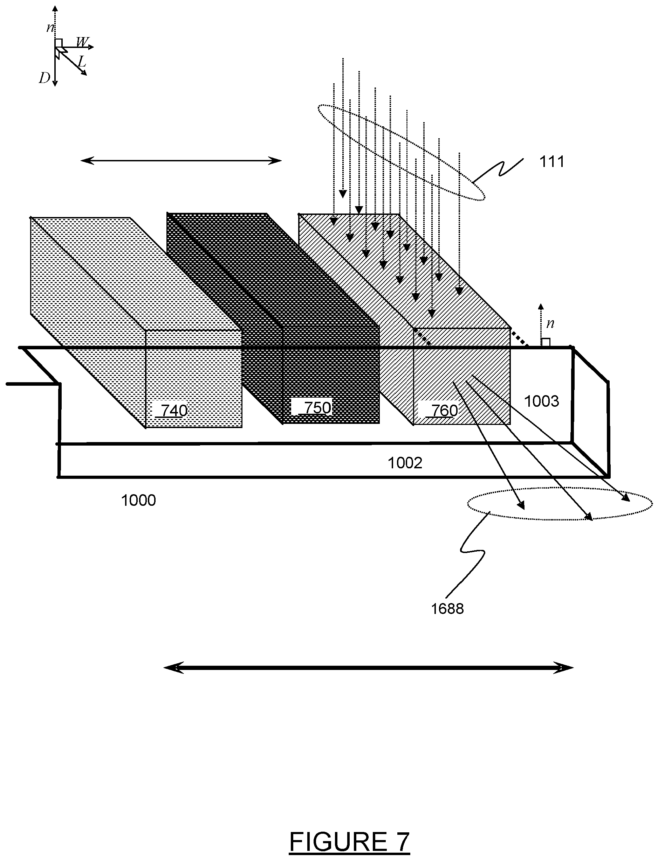

As illustrated in FIGURE 7, multiple solid structures 740, 750 and 760 of different x-ray generating materials may be used in an anode target as well.

Although the physical translation of the target under the electron beam may allow the materials to be "switched" from one to another while producing a beam that remains aligned with a single set of x-ray optics, other embodiments in which the electron beam is simply directed from one set of materials to another may also be used. This may be beneficial in cases where the different x-ray generating materials are aligned with different sets of x-ray optics, with each set of optics tuned to match the radiation spectrum of x-rays for each material. A target material and optical system may be considered "matched" when the cutoff energy of the optical system is above a strong characteristic line of the target material and when the optical system is designed to optimize reflection of the selected characteristic line.

### 4. X-ray Optical System.

Once x-rays are generated by a high-brightness x-ray source, a portion of the x-rays can be collected by an optical train to be subsequently collimated and/or focused onto the object to measure the x-ray absorption and transmission. In many instances, this optical system will comprise x-ray reflectors that collect and focus x-ray energies of a bandwidth greater than 0.1% of an x-ray energy of interest.

Optical trains such as may be used in embodiments of the invention disclosed herein have been described in detail in the US Patent Application entitled X-RAY ILLUMINATORS WITH HIGH FLUX AND HIGH FLUX DENSITY (US Patent Application 15/431,786, filed Feb. 14, 2017) and its parent Applications (US Patent Applications 15/269,855, filed Sep. 16, 2016, and now issued as US 9,570,265, and 14/544,191, filed Dec. 5, 2014 and now issued as US 9,449,781).

Referring back to the general illustration of FIGURE 1, in general, the generated x-rays will diverge from the x-ray source 80, and an optical train 3000 comprising a set of one or more x-ray optical elements will collect a portion of the x-rays and redirect their path of propagation.

The optical train 3000 may be a simple, single x-ray reflecting optical element with the topology of a hollow tube (e.g. capillary tube), or a more complex set of x-ray optics. This optical train 3000 can be aligned along the axis of brightest illumination so that a portion of the diverging x-rays 888 will reflect off the inner surface. The curvature of the inner surface may take a number of geometric forms, but a very useful set of geometric forms for a number of optical elements are found among the quadric surfaces. Examples of reflecting surface profiles corresponding to one or more portions of ellipsoids, paraboloids, hyperboloids, elliptic cylinders, cylinders, and conical (or 2D versions of the 3D shapes mentioned above).

For the embodiments presented here, the optical train produces a focused beam of x-rays. In some embodiments, an optional aperture 272 may be placed in the same plane as the focal plane to reduce background from scattered x-rays which helps to improve the signal-to-background ratio of the system. By placing an object 240 to be examined where it will be illuminated by the converging x-rays 887, a transmitted diverging x-ray wavefront 888-T is produced on the far side of the focal plane and may be subsequently analyzed by the spectrometer.

Note that these the following figures illustrating various optical trains are not drawn to scale, but drawn to illustrate the operating principle more clearly.

### 4.1. Ellipsoidal Optics.

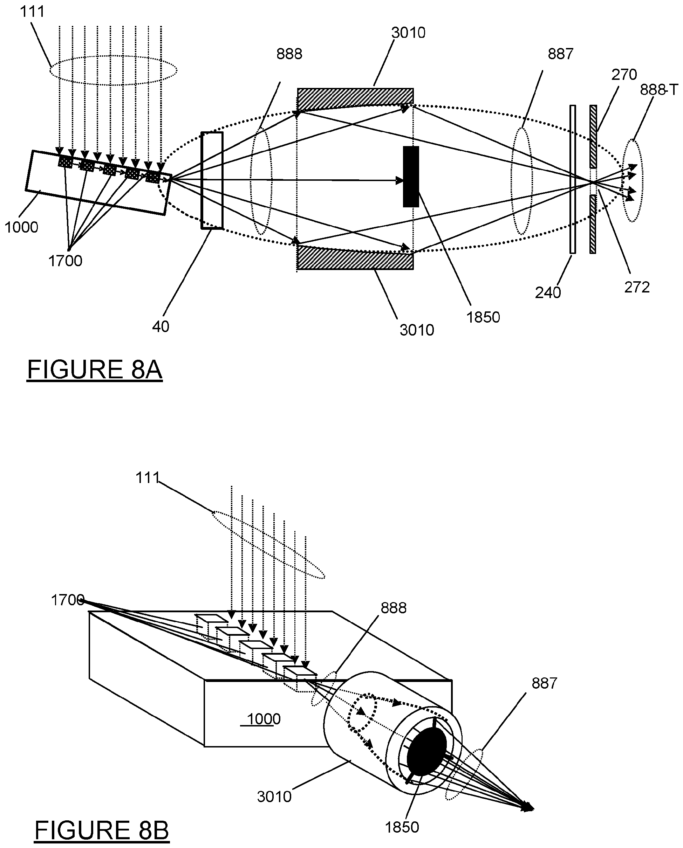

FIGURE 8A illustrates in cross section a possible optical configuration for the optical train using the form of an ellipse. An elliptical capillary optic has two foci *F₁* and *F₂* such that any photons radiating from one of the foci will be reflected and converge onto the other.

FIGURES 8A -8B illustrate a portion of an embodiment of the invention utilizing such an ellipsoidal reflector 3010. An x-ray source generates diverging x-rays 888 that enter the ellipsoidal optical element 3010. A portion of the x-rays experience total external reflection from the inner elliptical surface of a tube-like optical element 3010, and become focused x-rays 887 that pass through an object 250 to be examined and arrive at a focal point. An aperture 272 in aperture component 270 is placed coincident with the focal plane.

FIGURE 8A illustrates x-rays 888 generated by bombarding microstructures 1700 with electron beam 111. Though x-rays 888 are illustrated as emitting from a single point on microstructure 1700, the x-rays may be generated by different and/or all portions of a microstructure. The emission of x-rays from a single point in FIGURE 8A and other figures is illustrated for purposes of simplicity and not intended to be limiting. In some embodiments, as illustrated in FIGURE 8A and the corresponding perspective view of FIGURE 8B, the on-axis x-rays may be blocked with a beam stop 1850. In some instances, beam stop 1850 of the system of FIGURE 8A, and in other systems and configurations disclosed herein, may be positioned on the incident beam side of the optical element 3010 or other locations (e.g. exit).

The optic element of the system described herein may include one or more reflectors that are matched to one or more target materials. The matching may be achieved by selecting optics with the geometric shape, size, and surface coating that collects as many x-rays as possible from the source and at an angle that satisfies the critical reflection angle of the x-ray energies of interest from the target. In some instances, the matching is based on maximizing the numerical aperture (NA) of the optics for x-ray energies of interest. The optic elements may be configured to focus or collimate the beam.

It should be noted that the drawings presented here are not illustrated to scale, but have been created to better point out how the invention is to be made and used.

### 4.2. Paraboloidal Optics.

In some instances, another possible optical configuration for the optical train uses the form of two parabolas. A parabola can have a single focus *Fₚ* such that any photons radiated from the point of focus will be reflected to form a parallel (collimated) beam.

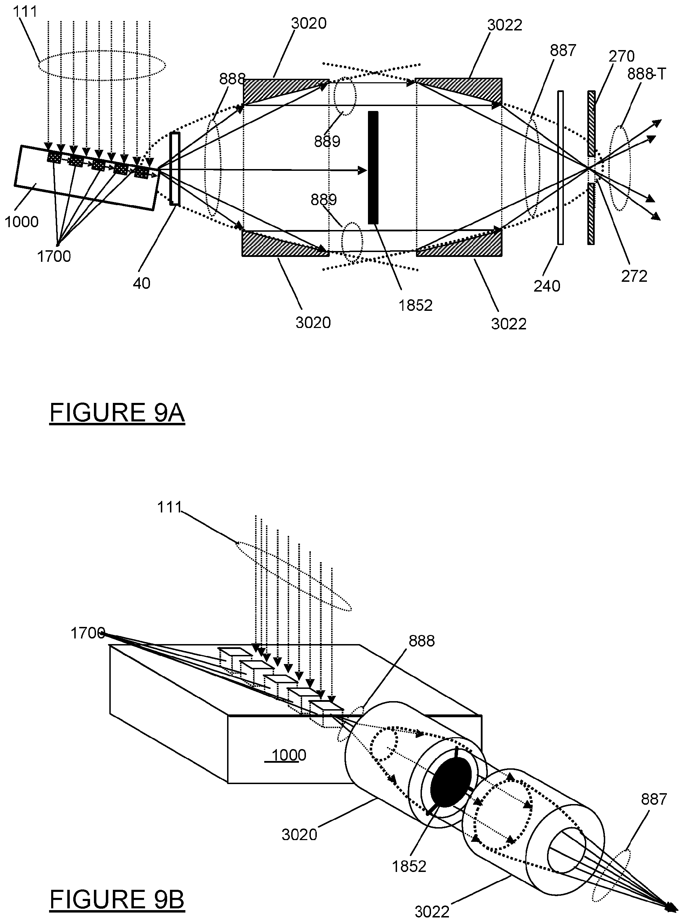

FIGURE 9A-9B illustrates a portion of an embodiment of the invention utilizing a paraboloidal reflector 3020. Electron beams 111 bombard a target 1000, which is at a near zero angle (as shown), to provide an x-ray source or at a shallow angle such as 6 degrees. The x-ray source generates diverging x-rays 888 that enter a first paraboloidal optical element 3020. A portion of the x-rays experience total external reflection from the inner paraboloidal surface of the tube-like optical element 3020, and become collimated x-rays 889.

Once collimated, a second optical element 3022 with a tube-shaped topology and paraboloidal inner surface, as shown in FIGURES 9A and 9B, may be aligned with the optical axis of the first optical element 3020 so that the collimated x-rays 889 are incident on the inner surface of the second optical element 3022 at angles smaller than the critical angle for the surface. In some embodiments, this second optical element is not a separate component but instead a different profile prescription than the first optical element and contained within the same capillary. The reflected x-rays then become focused x-rays 887 that converge onto a focal point after passing through an object 240 to be examined. An optional aperture 272 is placed at the focal plane of the second optical element.

Although the illustration shows a second paraboloidal optical element 3022 of the same size and shape as the initial paraboloidal optical element 3020, these need not be the same dimensions and may have different curvature and relative focus positions.

In some embodiments, as illustrated in FIGURE 9A and the corresponding perspective view of FIGURE 9B, the on-axis x-rays may be blocked with a beam stop 1852. Although shown positioned between the two paraboloidal optical elements, the beam stop may be positioned at different positions with respect to the optic, including at the entrance to the first optical element 3020 or at the exit of the second optical element 3022 as well.

### 4.3. Other X-ray Optics.

Other x-ray optical systems, such as Wolter Type I optics, cone shaped capillary optics, polycapillary optics, Kirkpatrick-Baez optics, Montel mirrors, etc. may be used as components of the optical train. Systems comprising filters and additional beam stops, etc. may also be used.

The optical elements described above may be fabricated of any number of optical materials, including glass, silica, quartz, BK7, silicon (Si), Ultra-low expansion glass (ULE^{™}), Zerodur^{™} or other elemental materials.

The reflective coatings used for the various optical elements used in embodiments of the invention as described above may be a single elemental material, to take advantage of the total external reflection for angles of incidence smaller than the critical angle, and preferably may be coated with a layer of higher mass density material (greater than 2.5 g/cm³) at least 25 nm thick. Materials such as gold (Au), silver (Ag), platinum (Pt), etc. may be used as single-material coatings for these optical elements.

The reflective coatings may also be multilayer coatings, with alternating periodic layers of two or more materials, that provide constructive interference in reflection for certain x-ray wavelengths. The reflection efficiency depends on the wavelength and angle of incidence of the x-rays as well as the thickness of the alternating layers, so this has limited use as a broad band reflector, but may be used if a narrow energy band is desired. Combinations that may be used for multilayer reflectors are tungsten/carbon (W/C), tungsten/silicon (W/Si), tungsten/tungsten silicide (W/WSi₂), molybdenum/silicon (Mo/Si), nickel/carbon (Ni/C), chromium/scandium (Cr/Sc), lanthanum /boron carbide (La/B₄C), tungsten/boron carbide (W/B₄C), and tantalum/silicon (Ta/Si), among others. The surface may also be a compound coating comprising an alloy or mixture of several materials.

Other x-ray optical elements, such as Fresnel Zone Plates, cylindrical Wolter optics, Wolter Type II or III optics, Schwarzschild optics, diffraction gratings, crystal mirrors using Bragg diffraction, hole-array lenses, multi-prism or "alligator" lenses, rolled x-ray prism lenses, "lobster eye" optics, micro channel plate optics may be used or combined with those already described to form compound optical systems for embodiments of the invention that direct x-rays in specific ways that will be known to those skilled in the art.

### 5. Spectrometer and Detector.

### 5.1. Basic Spectrometer.

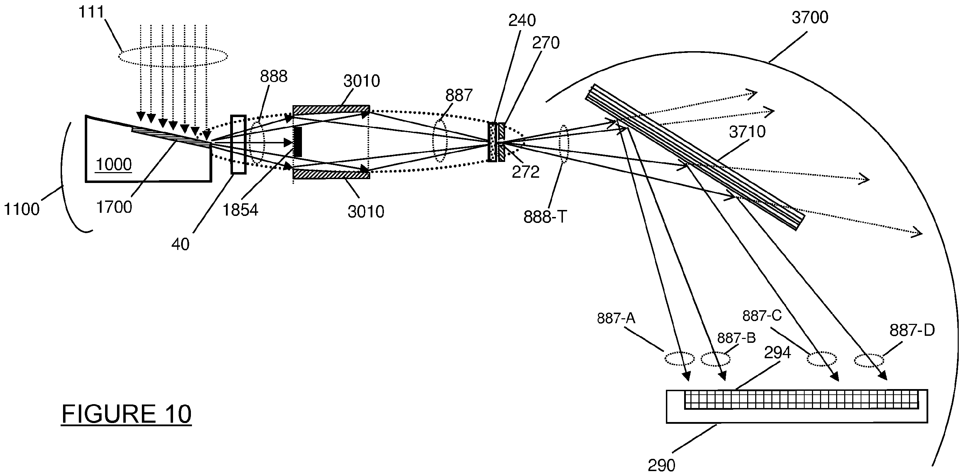

FIGURES 10-12 illustrate schematic cross-section views and a perspective view the elements of a spectrometer system that may be used in some embodiments of the invention. In FIGURE 10, the x-ray target 1100 comprising a substrate 1000 and x-ray generating material 1700 is bombarded by electrons 111 in a vacuum. As drawn, the x-rays 888 emerge at a non-zero take-off angle relative to the surface.

The x-rays 888 that diverge from the x-ray source pass through the window 40 in the vacuum chamber and are collected by an optical train. In the example of FIGURES 10-12, the optical train comprises a single capillary optic 3010 and a beam stop 1854. This single optic 3010 has an inner ellipsoidal surface that reflects x-rays at near-grazing angles and focuses them onto a focal point. An optional aperture 272 with an aperture component 270 is coincident at the focal point. An object 240 to be examined is positioned before the aperture component 270, and the x-rays passing through the aperture 272 are those that have been transmitted through the object 240.

The aperture 272 will typically be a small hole of a diameter comparable to the size of the focused spot produced by the x-ray optical train. Aperture diameters of 5 to 25 microns may be typical in some embodiments of the invention. In some embodiments of the invention, the aperture may comprise a slit, generally oriented horizontally (i.e. in the direction parallel to the sagittal plane). The aperture component itself may comprise a piece of metal (e.g. molybdenum or platinum) having a thickness shorter than the depth of focus for the optical system (e.g. on the order of 20 microns thick).

On the far side of the aperture component 270, the x-rays emerge from the point of focus as diverging x-rays 888-T. The geometry will generally be an annulus of x-rays, as defined by the focusing lens 3010. As shown, the aperture 272 serves as the point of origin for the x-rays entering the spectrometer 3700. Additional apertures may also be used within the spectrometer, such as in front of the detector.

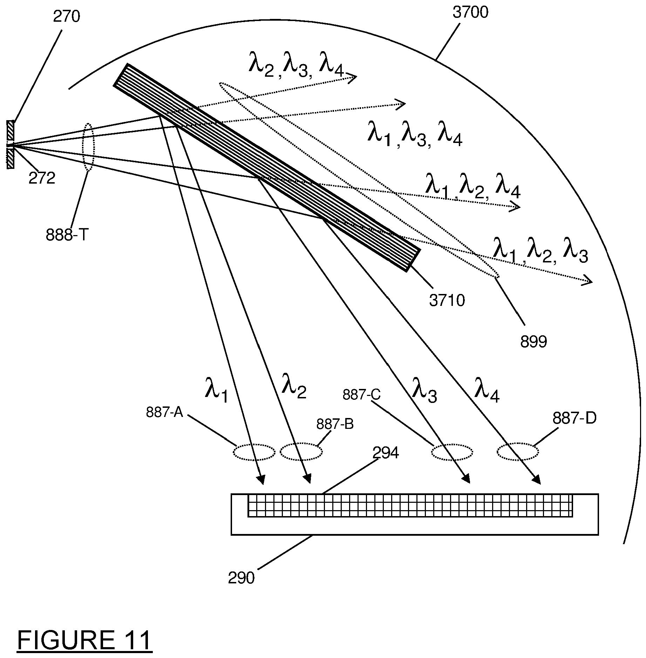

In some embodiments of the spectrometer, it is a parallel detection spectrometer as known in the art [see "DB Wittry, 'X-ray crystal spectrometers and monochromators in microanalysis.' Microsc. Microanal. 7, 124-141 2001"]. In such spectrometers, the diverging annular cone of x-rays 888-T will fall onto the surface of a diffracting analyzer crystal 3710, which will diffract x-rays of different wavelengths λ₁, λ₂, λ₃ λ₄, etc. (shown as ray bundles 887-A, 887-B, 887-C, and 887-D etc., respectively) to different points on positionally sensitive detector 290 with a sensor sensor 294. As shown in FIGURE 10 and, in more detail in FIGURE 11, the crystal analyzer will act as a Bragg diffraction element. X-rays that are not diffracted 899 are typically transmitted through the crystal analyzer and may be absorbed by a beam stop (not shown).

The crystal analyzer 3700 may be positioned -250 mm away from the aperture 272 and will typically have a width of about 2 cm. and a length of about 5 cm, but other dimensions may be used. The crystal analyzer 3700 may comprise a single planar Bragg crystal, but in practice, the analyzer crystal may also comprise a thin crystal curved in the sagittal direction. This allows the x-rays diverging in the directions perpendicular to the direction of propagation to be collected and focused onto the detector 290, while allowing the x-rays to be diffracted by wavelength along the direction of propagation. Such orientations are sometimes called a von Hamos Spectrometer. In some implementations, the crystal may be doubly curved. For some implementations, a bending radius between 50 and 200 mm may be used. In other implementations, parallel detection spectrometers may be of geometries and designs that have been proposed by Schnopper, Birks, Henke, Zaluzec, Fiori, and others.

Curved crystal analyzers such as those made from thin wafers of single crystal silicon (e.g. aligned with the surface along the 111 or the 220 planes) may be used in some embodiments of the invention. Single crystal silicon analyzers may be grown onto a curved substrate, or thinned from previously grown silicon wafers and bent.

Crystal analyzers comprising graphite may also be used, in particular those comprising graphite layers aligned along the 002 plane such as highly oriented pyrolytic graphite (HOPG), or highly annealed pyrolytic graphite (HAPG). In some instances, the crystals may include HOPG(002) and HAPG(002). In some embodiments, a graphite layer between 15 and 200 microns thick is grown onto a curved substrate.

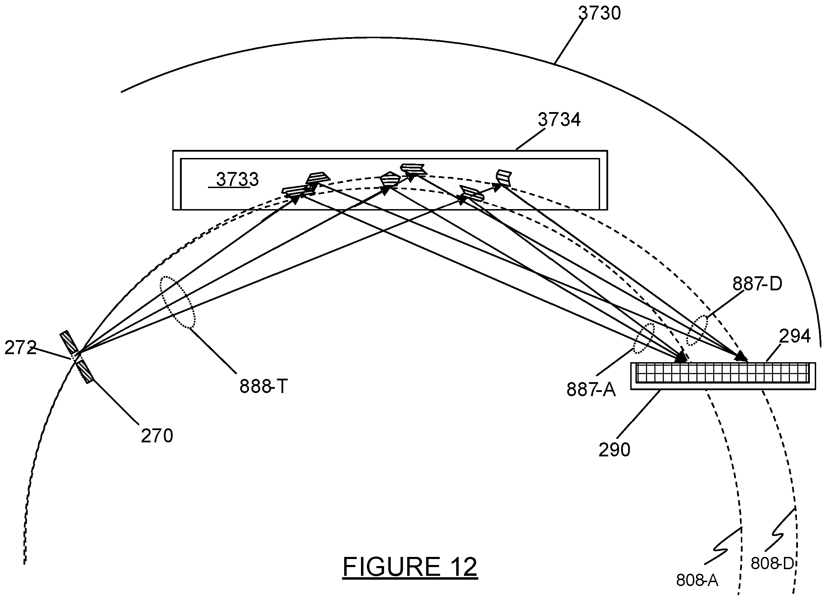

Dispersion is achieved because the diverging cone has a variety of angles of incidence on the crystal analyzer, and therefore for at least some angle of incidence, x-rays of a particular energy within the designated x-ray bandwidth may be reflected. However, all other wavelengths at the same angle of incidence will not be diffracted, and will simply pass through the crystal analyzer shown as transmitted x-rays 899 in FIGURES 11 and 12.

FIGURE 12 illustrates a geometry of the spectrometer used in some embodiments. Spectrometer 3730 uses a crystal analyzer in the form of a mosaic crystal 3733. In the mosaic crystal 3733, the crystal analyzer comprises an ensemble of micro-crystals at varied angles throughout the material, each as small as a few hundred nanometers or as large as several microns, held with a backing 3734, typically made of metal. In some instances, the mosaic crystal can be curved at least in the sagittal non-dispersive direction. Transmitted x-rays that were not diffracted by the micro-crystal at the surface may still be diffracted from another micro-crystal positioned deeper within the mosaic.

The origin of x-rays (the focal point of the x-ray optics), the diffracting crystal, and the point of convergence at the detector all fall along the Rowland Circles 808-A and 808-D for the corresponding wavelengths. Although other micro-crystals are present in the mosaic crystal, only those that lie along the Rowland Circle and have the correct orientation will diffract x-rays to converge to the same position at the detector 290. X-rays of varying wavelengths distributed throughout the diverging beam 888-T have a better chance of encountering a properly positioned and oriented micro-crystal. Use of mosaic crystals can collect as much as 100 times the amount of x-rays that a single crystal diffraction element can produce. Note that although micro-crystals with "random" orientations are illustrated to dramatically illustrate the mosaic non-uniformity, most mosaic crystals will be more aligned.

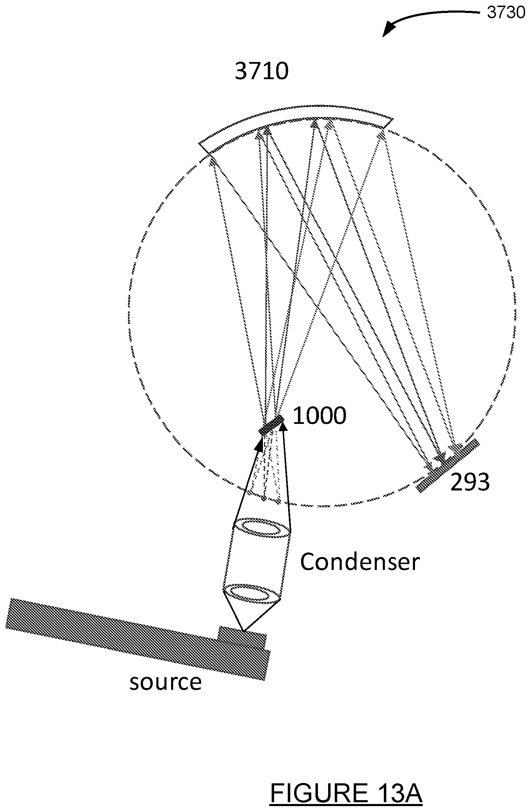

FIGURE 13A illustrates a spectrometer design based on a Rowland Circle geometry with a crystal that is curved to Johansson geometry. In some instances, the crystal could be curved to Johann geometry. The crystals could be singly curved -- that is, curved only in the dispersion plane and flat in the sagittal (or vertical) plane. In other instances, the crystals could be doubly curved -- that is, curved in both dispersion and sagittal planes. Examples of such doubly curved crystals include, but not limited to, spherical Johann, Toroidal Johann, Spherical Johansson and Wittry crystals. As shown, an apparent source 272 behind the sample 1000 emits x-rays toward the Johansson crystal 3710. The apparent source is often produced by an apertured or focused x-ray beam generated from a laboratory x-ray source in combination with an optic as has been previously described, or in some instances, by electron bombardment of a sample in an electron microscope. In some instances, the focal spot of the focused x-ray beam is coincident with a sample - in other instances, the focal spot is behind the sample 1000 and is coincident with an aperture (not shown). The x-rays are transmitted through the sample and propagate towards Johansson crystal 3710, which focuses the x-rays to a spatially resolving detector 293. The placement of the apparent source 272 within the Rowland circle is known as an off-Rowland circle geometry.

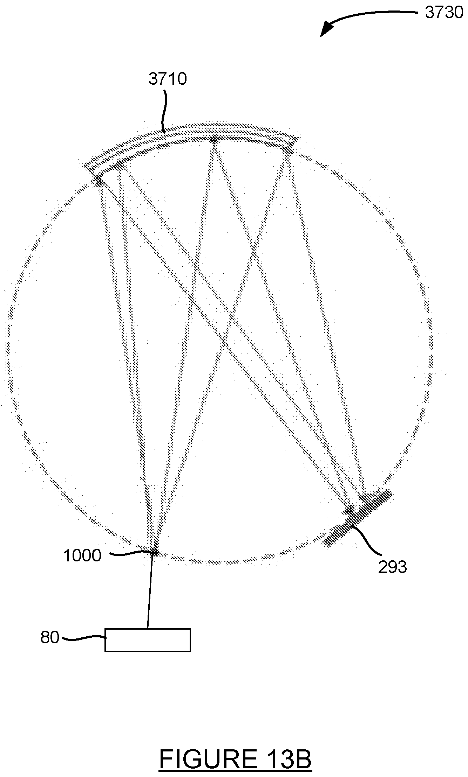

In some other implementations, as illustrated in FIGURE 13B, a sample 1000 can be placed on the Rowland circle. The source 80 can be located further away from the Rowland circle and direct x-rays to the sample 1000, with an optional x-ray optic placed between the x-ray source 80 and the sample 1000. Note that the sample 1000 may furthermore be placed slightly before the focal point of a focusing optical system if it is employed. The sample acts as an apparent source of x-rays and crystal 3710 disperses the x-rays. The x-ray detector 293 simultaneously detects all the x-rays dispersed by the crystal 3710 over a certain angular range. The implementations illustrated in FIGURES 13A and 13B are sometimes referred to as parallel detection.

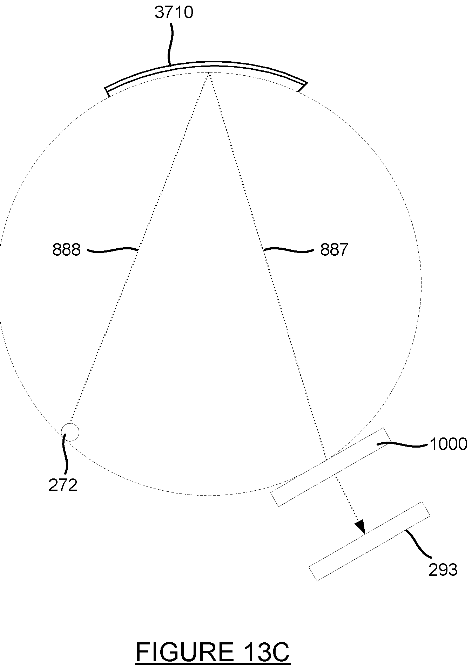

In some other implementations, as illustrated in FIGURE 13C, sometimes referred to as serial detection or scanning geometry, an apparent source 272 is located on the Rowland circle and directs x-rays 888 to a Johann crystal 3710, which collects the x-rays and focuses x-rays 887 on the sample 1000 that is located on the Rowland circle. An x-ray detector 293 is behind the sample to collect all x-rays transmitted through the sample. The x-ray detector 293 could be a point detector such as, but not limited to, Silicon Drift Detector, Gaseous Proportional counter, solid state detectors etc. In such implementations, detection efficiency is optimized for only a single x-ray wavelength (or extremely narrow bandwidth of x-rays) rather than multiple wavelengths as in the case of parallel detection x-ray spectrometers. The relative alignment of the x-ray origin, crystal, and detector, as well as parameters of the Rowland Circle (e.g. diameter), can be changed by motion of one or more of the components.

In some embodiments in which x-ray absorption near edge spectroscopy (XANES) is more important to obtain than extended x-ray absorption fine structure (EXAFS), this is preferred. Note that XANES is considered pre-edge and edge information and EXAFS is above the absorption edge and although no clear principle definition distinguishes the two systems, general guidelines locate the XANES regime in the range where potential is within tens of eV (e.g. 50 eV) from the edge and EXAFS is where the potential begins anywhere from 20-50 eV above the edge and typically extends up to 1 keV over the edge.

In some embodiments, the sample may be a thin film or structure existing on a substrate that may be too thick for the x-rays of energies of interest to transmit through the sample. In such embodiments, reflection geometry may be preferred. The x-rays are typically incident on the sample at a very shallow incident angle, typically below a couple of degrees to meet the condition of total reflection at the film/substrate and/or structure/substrate interface. The x-rays penetrate through the film or structure of interest but get reflected at the interface of the film/substrate or structure/substrate interface and emerge from the same side of the sample as the incident beam. This avoids the problem of insufficient transmission of x-rays through the sample. Note that this geometry may be used for XANES and EXAFS.

### 5.2. Multi-Crystal Spectrometer

In some embodiments of the invention, the spectrometer may use different crystal types for different regimes of the x-ray absorption spectroscopy acquisition. In some embodiments, the spectrometer uses at least two different crystal types: with at least one being a single crystal and at least one being a mosaic crystal. In some embodiments, the single crystal may be a flat crystal that is aligned to measure the x-ray wavelength of interest. In preferred embodiments, the crystal is curved in a tangential direction (e.g. Johann, Johannsson).

The single crystal and an x-ray detector (typically referred to as a "single crystal spectrometer") are used for the acquisition of XANES information. An apparent source of x-rays, crystal, and detector are aligned such that the apparent source is either on or within a Rowland circle. The apparent sample spot is achieved by either an aperture or through direct focused illumination on the sample using an x-ray optical train. The Rowland circle is a circular geometry in which an apparent source of x-rays on the sample, the crystal, and a detector can be placed so that the spectral lines are to be brought into focus on the detector. In some embodiments, if the apparent source of x-rays is placed within the Rowland circle, multiple x-ray energies can be dispersed along the detector and an x-ray detector with energy dispersive capabilities can be used. In some embodiments, this may be a CCD detector with sufficiently fast readout speeds. In other embodiments, this may be an energy dispersive array detector. In some embodiments, if the apparent source of x-rays is placed on the Rowland circle, a narrow range of wavelengths is received by the detector.

In a subset of these implementations, the crystal may be used for serial detection by placing the single crystal on a Rowland circle. In other subsets of these implementations, the single crystal may be used for parallel detection by placing the apparent source of x-rays within a Rowland circle (off-Rowland geometry). Once The XANES spectrum is obtained, it can be then normalized by the direct beam spectrum acquired by removing the sample from the beam. Single crystals used may include Si(111), Si(220), Si(400), Ge(111), Ge(220), Ge(400), and Ge(620).

The mosaic crystal and at least one spatially resolving x-ray detector (referred to as a "mosaic crystal spectrometer") is used for the acquisition of EXAFS information. In some embodiments, the mosaic crystal is a curved in the sagittal direction and the apparent source, mosaic crystal, and detector are aligned in a parallel detector geometry. The system may then be used with a different set of crystals, such as HOPG crystals, to focus x-rays at a spatially resolving detector in a parallel detection geometry such as von Hamos for acquisition of EXAFS spectrum. The different set of crystals can be positioned in a position suitable for focusing x-rays at the spatially resolving detector. In some instances, the crystals may be interchangeable and positioned using electro-mechanical mechanisms, or may be stationary as a source is positioned to provide x-rays at the currently selected crystal. After the EXAFS spectrum is acquired, normalization can be performed by acquiring the direct beam spectrum by removing the sample from the beam.

The XANES and EXAFS data can be processed by a spectra processing mechanism, which can be implemented for example by signal processing electronics 292 an analysis system 295. Obtaining spectra in the energy range of 100 to 200 eV near and including the absorption edge energy, is common to both XANES and EXAFS spectra but the XANES spectrum is obtained at higher energy resolution. With appropriate overlay, normalization, correlation, stitching and processing using techniques well known in the several fields such as spectroscopy, imaging etc., the near edge portion of the EXAFS spectrum can be replaced with the XANES spectrum resulting in the XANES and EXAFS spectra combined together in a unique fashion to provide a complete XAS spectrum with no loss in information. Processing of the XANES spectra, for example by a single crystal spectrometer, and the EXAFS spectra, for example by a mosaic crystal spectrometer, produce x-ray absorption spectroscopy data in which the spectrum nearest to the absorption edge is refined with the higher spectral resolution spectrum. This unique method provides for a complete and a more refined XAS analysis.

In some embodiments, two spectrometer designs or a single spectrometer capable of being used in the above approach.

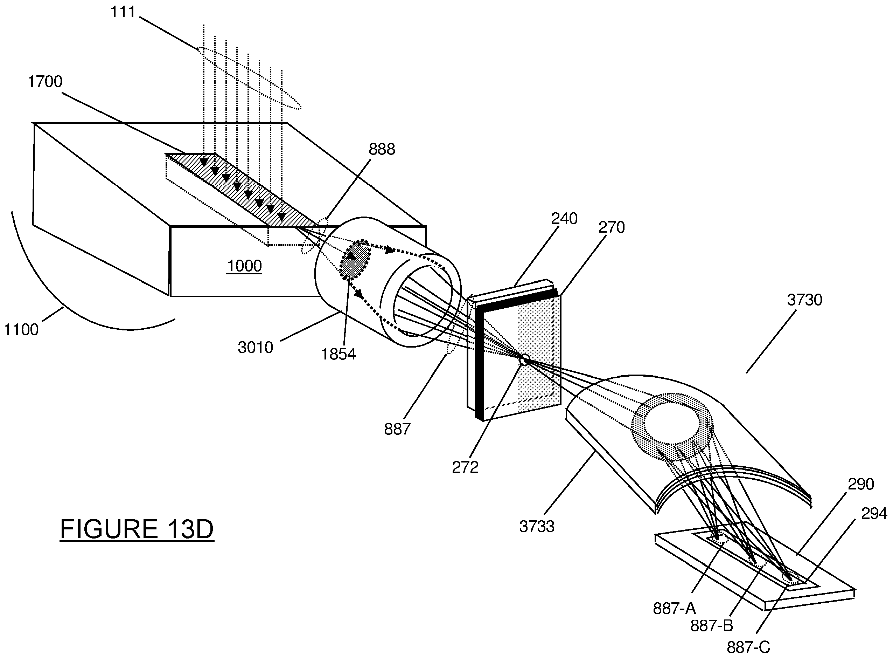

FIG 13D illustrates a schematic perspective view of a system using a curved crystal analyzer that distributes the spectrum along one axis, while focusing x-rays in the other (sagittal) axis. As noted before, it should be clear that the drawings presented here are not illustrated to scale, but have been created to better point out how the invention is to be made and used.

For more on crystal or multilayer reflectors, see James H. Underwood, "Multilayers and Crystals", Section 4.1 of the X-ray Data Booklet, which may be downloaded at: xdb.lbl.gov/Section4/Sec_4-1.pdf.

### 5.3. Detectors.

In embodiments in which a wavelength dispersive geometry is used, the detector may be any x-ray counting detector.

In the embodiments in which a spatially resolving detector is used, the spatially resolving detector 290 may comprise a 2D or 1D array sensor 294. In some embodiments of 2D arrays, one axis may be significantly longer than the other. A 2048 x 256 pixel array may be used, although a detector with at least 128 pixels along the long axis (the dispersive direction) may be preferred. In such embodiments, it is preferred that the long axis will be aligned along the direction of x-ray propagation, and the dispersion of x-rays by wavelength will occur along that axis. The short axis will be aligned with the sagittal direction. In a perfect system with perfect sagittal focus, a 1-D array detector 1 pixel wide may be used, but as a practical matter, the diffracted x-rays may not form a perfect spot, and so detection using multiple pixels may provide a higher collection efficiency.

The spatially resolving detector 290 may be any one of a number of x-ray array detectors, such as a CCD array (x-ray sensor), a CMOS or S-CMOS detector, a flat panel sensor, or any one or more position sensitive x-ray array detectors known in the art that converts x-ray intensity to an electronic signal, including 1-D line and 2-D array detectors. Such examples of position-sensitive detectors include linear detectors, position-sensitive array detectors, pin diodes, proportional counters, spectrometers, photodiode detectors, scintillator-type and gas-filled array detectors, etc. In some embodiments, the detector may include one or more detector elements of any type that detects x-rays, including proportional and avalanche detectors or energy-dispersive elements.

Other detector variations may also be used in other embodiments of the invention. For example, additional spectral filters may be used between the object and the detector to select a certain portion of the x-rays emerging from the object for detection. This may be especially useful if there is a significant amount of x-ray fluorescence from the object that may interfere with the signals generated by the transmitted x-rays. Alternatively, a second detector may be included to detect the intensity of the incident x-rays, allowing normalization of the transmitted signal with any variations in the incident x-ray intensity.

Energy resolving pixel array detectors may also be used. In these detectors, each pixel also provides information on the energy of x-rays detected, and may be especially useful when the object produces significant fluorescence. The silicon PIN photodiode (Si-PIN) is a simple and low cost class of EDS spectrometer that typically has the lowest performance in terms of energy resolution. Energy resolving pixel array spectrometers are available and may be used in some embodiments of the invention. Another type of detector is known as a pixel array microcalorimeter spectrometer. In some instances, a CCD detector with a sufficiently fast readout speed serves as an energy resolving detector.

Additional configurations may involve additional filters (e.g. thin foils containing the appropriate element(s)) along the beam path before the detector to preferentially attenuate some unwanted x-rays from arriving at the spectrometer, reducing the background due to the detection of the x-rays scattered from the object or reduce total x-ray flux entering by the spectrometer to avoid saturation. Multiple spectrometers of the same type or combination of two or more types can be used simultaneously or interchangeable to utilize their respective strength individually or collectively.

In some embodiments, an aperture or slit component may be placed before the detector. Other detector geometries and arrangements for x-ray fluorescence may be known to those skilled in the art. For more on x-ray detectors, see Albert C. Thompson, "X-Ray Detectors", Section 4.5 of the X-ray Data Booklet, which may be downloaded at: xdb.lbl.gov/Section4/Sec_4-5.pdf.

### 5.4. Options and Versatility.

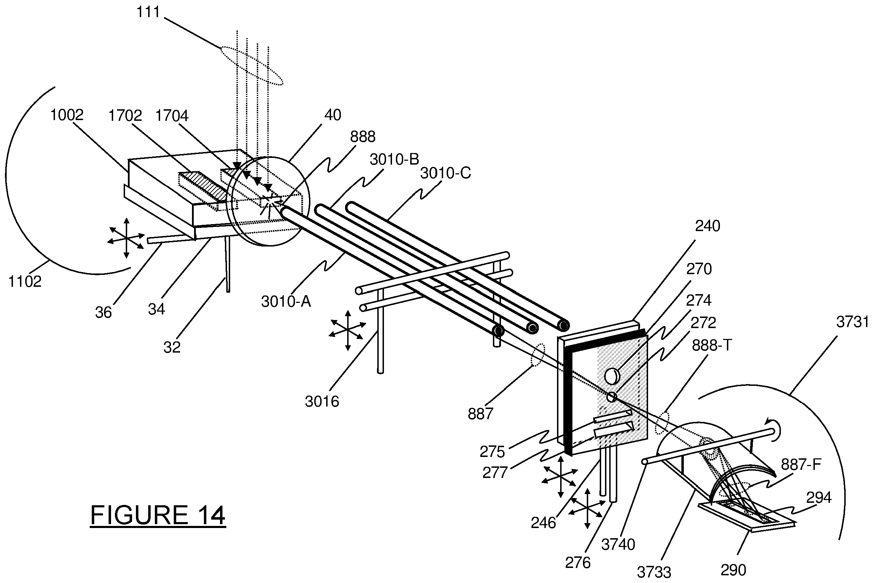

FIGURE 14 provides a schematic illustration of a spectrometer system having a diversity of options built into the system.

The target 1102 comprises a substrate 1002 and two (or more) different types of x-ray generating materials 1702 and 1704. The mount 34 upon which the target is secured not only connects to the electrical lead 32, but also has a controller 36 that allows physical motion in a lateral direction for the selection of the material to be bombarded by electrons 111.

The system of FIGURE 14 also has multiple different optical trains 3010-A, 3010-B and 3010-C supported in a mount 3016 that allows the set of optical trains to be moved laterally to allow alignment of any of the optical trains (which may use different material coatings and filters inside to allow different x-ray bandwidths) with any of the x-ray generating targets 1702, 1704 etc. As illustrated, the rightmost x-ray generating material 1704 is being bombarded by electrons, and the left most optical train 3010-A is positioned to collect the x-rays transmitted through the window 40. The mount that provides for movement of the x-ray optical systems allows for selecting which x-ray optical system will collect x-rays from the x-ray source.

As before, the converging x-rays 887 emerging from the optical train are focused onto an aperture 272 in an aperture component 270, and also pass through the object 240 to be investigated. The resulting x-rays diverging from the aperture 272 become the apparent source of the x-rays diffracted by the spectrometer 3700.

However, the aperture component 270 may have multiple openings, such as circular apertures 272 and 274 having different sizes, or slits 275 and 277 of different sizes.

As before, the spectrometer 3731 comprises a mosaic analyzer crystal 3733 that disperses the x-rays onto the x-ray sensor 294 of the detector 290. However, in case the wavelength range is insufficient to span the entire spectrum in a single shot, this spectrometer 3731 also comprises a mount 3740 that allows the analyzer crystal 3710 to rotate about an axis perpendicular to the direction of x-ray propagation. This allows a larger range of x-ray dispersion to be measured using a single detector.

Such a multi-source / multi optic system may be used to collect x-ray spectra in a sequence of bands (e.g. combinations for different 1 keV bands). Rotation of the crystal about the axis may expand the range of energies collected by from the same source/optic combination.

In other variations, optical trains with a variety of beam stops may be used. Beam stops may be positioned at the entrance to the optical train, at the exit of the optical elements of the optical train, or in between elements of the optical train. In some embodiments with a single condenser optic, there may be a stop on both the entrance side and the exit side of the condenser optic, with the exit-side stop being ~ 2/3 the size of entrance stop. These stops will both block the through-beam, and in addition, the exit stop will also block a good portion of any scattered x-rays from the condenser optic. This provides for a cleanly reflected x-ray beam.

In other variations, a number of shielding elements may be used to block or reduce unwanted x-rays from being detected. In some variations, an x-ray fluorescence detector is used to monitor incident x-rays and/or monitor the elemental composition of the sample. In other variations, the entire system (and not just the x-ray source) may be enclosed in a vacuum chamber, removing the need for the window 40 be present to maintain the vacuum around the x-ray source. Likewise, the optical train and spectrometer may be flushed with helium gas, to reduce scattering in the system.

In some variations, the sample is moved relative to the spectrometer to perform 2D mapping or 3D tomography of XAS information.

### 5.4. Method

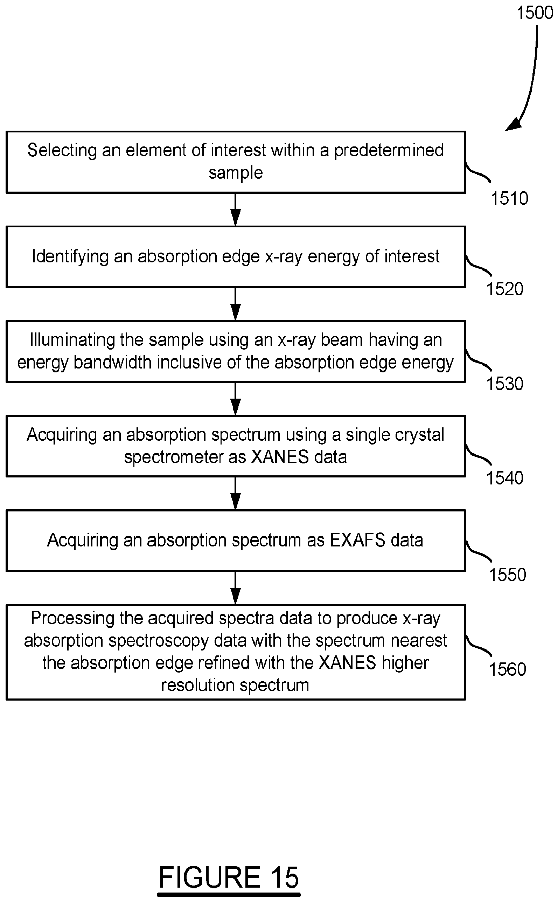

FIGURE 15 illustrates a method for efficiently obtaining x-ray absorption spectroscopy information using multiple crystals. An element of interest is selected within a predetermined sample at step 1510. In some instances, the element may be selected by an x-ray absorption spectrometer (XAS) system in response to receiving input from a user. An absorption edge x-ray energy of interest may then be identified at step 1520. In some instances, the absorption edge can be identified by the present system in response to user input received by the present system.

The sample can be illuminated using an x-ray beam having an x-ray bandwidth inclusive of the absorption edge energy at step 1530. The x-ray beam can be provided by micro-focus x-ray source or other source. The absorption edge may be for an element of interest within the predetermined sample.

A first absorption spectrum is acquired using a single crystal spectrometer as XANES data at step 1540. The absorption spectrum can be acquired at high spectral resolution of greater than, for example, 3 eV, for a bandwidth of x-ray energies near and inclusive of the selected absorption edge.

A second absorption spectrum is acquired using a mosaic crystal spectrometer as EXAFS data at step 1550. The EXAFS data can have a coarser spectral resolution than the XANES data absorption spectrum acquired using the single crystal spectrometer. The second spectrum is acquired for a bandwidth of x-ray energies wider than the bandwidth of x-rays acquired by the single crystal spectrometer. The absorption spectrum can be inclusive of the absorption edge such that the absorption spectrum data acquired using the mosaic crystal spectrometer contains at least the extended x-ray absorption fine structure (EXAFS) data.

The acquired XANES spectra data and EXAFS spectra data can be processed to produce x-ray absorption spectroscopy data at step 1560. The produced x-ray absorption spectroscopy data nearest to the absorption edge is refined with the higher spectral resolution spectrum obtained by the single crystal spectrometer.

In some embodiments, only one absorption spectrum will be acquired by either a single crystal spectrometer as XANES or a mosaic crystal spectrometer as EXAFS. The results will be compared to a library of standards as a "fingerprint" for refining the analysis.

### 6. Limitations and Extensions.

With this Application, several embodiments of the invention, including the best mode contemplated by the inventors, have been disclosed. It will be recognized that, while specific embodiments may be presented, elements discussed in detail only for some embodiments may also be applied to others. Also, details and various elements described as being in the prior art may also be applied to various embodiments of the invention.

While specific materials, designs, configurations and fabrication steps have been set forth to describe this invention and the preferred embodiments, such descriptions are not intended to be limiting. Modifications and changes may be apparent to those skilled in the art, and it is intended that this invention be limited only by the scope of the appended claims.

## Claims

1. A method for performing x-ray absorption spectroscopy, the method comprising:
illuminating an object using an x-ray beam with an energy bandwidth greater than 0.1% and inclusive of the energy corresponding to an absorption edge of an atomic element;
acquiring a first x-ray absorption spectrum from the object at a first energy resolution better than 3 eV, using a single crystal spectrometer, over a first energy bandwidth inclusive of the absorption edge;
acquiring a second x-ray absorption spectrum from the object using a mosaic crystal spectrometer at a second energy resolution coarser than the first energy resolution and over a second energy bandwidth wider than the first energy bandwidth and inclusive of said absorption edge; and
processing the first and second x-ray absorption spectra to produce a third x-ray absorption spectrum in which the second x-ray absorption spectrum within the first energy bandwidth corresponding to the first x-ray absorption spectrum is refined using the first x-ray absorption spectrum.

2. The method of claim 1, further comprising focusing the x-ray beam on the object using at least one capillary reflective x-ray focusing optic, the energy bandwidth inclusive of the said absorption edge and having energies greater than 100 eV above the absorption edge.

3. The method of claim 1, wherein the single crystal spectrometer comprises a single crystal curved at least in the dispersion plane, optionally wherein acquiring the first x-ray absorption spectrum comprises using a spatially resolving detector to detect x-rays dispersed by the single crystal while the object, the single crystal, and the spatially resolving detector are in an off-Rowland circle geometry.

4. The method of claim 1, further comprising:
selecting the atomic element within; and
identifying an absorption edge x-ray energy of said atomic element for performing x-ray absorption spectroscopy measurement.

5. The method of claim 1, wherein the mosaic crystal spectrometer comprises a mosaic crystal curved at least in the sagittal direction of dispersion, and acquiring the second x-ray absorption spectrum comprises using a spatially resolving x-ray detector to detect x-rays dispersed by the mosaic crystal while the mosaic crystal and the spatially resolving detector are in a Von Hamos geometry.

6. The method of claim 1, wherein:
the first x-ray absorption spectrum contains at least part of an x-ray absorption near edge structure (XANES) spectrum; and/or
the second x-ray absorption spectrum contains at least extended x-ray absorption fine structure (EXAFS) data.

7. A system for performing x-ray absorption spectroscopy, the system comprising:
an x-ray source (80);
a mount (244) configured to support an object (240) to be examined;
at least one focusing x-ray optic (3000) configured to collect x-rays from said x-ray source with an energy bandwidth greater than 0.1% of an x-ray energy corresponding to an absorption edge of an atomic element to be detected in the object, the energy bandwidth inclusive of the x-ray energy corresponding to the absorption edge, the at least one focusing x-ray optic further configured to focus a portion of the collected x-rays onto a focal spot with a focus size less than 500 micrometers;
at least one spectrometer (3700) comprising:
at least one single crystal (3710) curved at least in the dispersion direction and having a first energy resolution better than 3 eV over a first energy bandwidth inclusive of the absorption edge;
at least one mosaic crystal (3733) having a second energy resolution coarser than the first energy resolution over a second energy bandwidth wider than the first energy bandwidth; and
at least one spatially resolving x-ray detector (290) configured to detect x-rays transmitted through the object.

8. The system of claim 7, wherein a reflecting surface of the at least one focusing x-ray optic comprises multilayer coatings.

9. The system of claim 7, further comprising:
a means to position the focal spot, the at least one single crystal, and the at least one spatially resolving x-ray detector in an off-Rowland circle geometry for parallel detection;
a means to position the focal spot, the at least one mosaic crystal, and the at least one spatially resolving x-ray detector in a Von Hamos geometry; and
a processing system configured to normalize and align a single-crystal x-ray absorption spectrum obtained with the at least one single crystal and a mosaic-crystal x-ray absorption spectrum obtained with the at least one mosaic crystal to produce a combined x-ray absorption spectrum in which the mosaic-crystal x-ray absorption spectrum within an energy bandwidth corresponding to the single-crystal x-ray absorption spectrum is refined using the single-crystal x-ray absorption spectrum.

10. The system of Claim 9, wherein
the single-crystal x-ray absorption spectrum has an energy resolution better than 3 eV over an energy bandwidth of 10 eV to 100 eV; or
the mosaic-crystal x-ray absorption spectrum has an energy resolution coarser than 3eV over an energy bandwidth over 100 eV.

11. The system of Claim 7, wherein the at least one focusing x-ray optic comprises a capillary x-ray optic having an interior reflecting surface, wherein at least a portion of the interior reflecting surface is a portion of a quadric surface, optionally wherein the portion of the interior reflecting surface is coated with a material with atomic number greater than 26 and is axially symmetric.

12. The system of Claim 11, furthermore comprising an aperture configured to selectively pass x-rays transmitted through the object while not passing fluorescence x-rays from the object, wherein optionally the aperture is positioned at or near the focal point of the focusing x-ray optic.

13. The system of Claim 7 or Claim 9, wherein the x-ray source comprises a plurality of x-ray target materials and an electron beam generator configured to generate an electron beam and to bombard a selected x-ray target material of the plurality of x-ray target materials with the electron beam, wherein optionally the x-ray source further comprises a mechanism to change the relative position of the plurality of x-ray target materials and the electron beam.

14. The system of Claim 9, wherein the means to position the focal spot, the at least one single crystal, and the at least one spatially resolving x-ray detector in an off-Rowland circle geometry further comprises a means to change a distance between the focal spot and the at least one single crystal to select the energy bandwidth of the single-crystal x-ray absorption spectrum.

15. The system of any of claims 7 to 14, wherein the at least one single crystal comprises a Johansson crystal.

## Patentansprüche

1. Verfahren zum Durchführen von Röntgenabsorptionsspektroskopie, wobei das Verfahren umfasst:
Beleuchten eines Objekts mit einem Röntgenstrahl mit einer Energiebandbreite von mehr als 0,1 % und einschließlich der Energie, die einer Absorptionskante eines Atomelements entspricht;
Erfassen eines ersten Röntgenabsorptionsspektrums des Objekts mit einer ersten Energieauflösung von besser als 3 eV unter Verwendung eines Einkristallspektrometers über eine erste Energiebandbreite einschließlich der Absorptionskante;
Erfassen eines zweiten Röntgenabsorptionsspektrums des Objekts unter Verwendung eines Mosaikkristallspektrometers mit einer zweiten Energieauflösung, die gröber ist als die erste Energieauflösung, und über eine zweite Energiebandbreite, die größer ist als die erste Energiebandbreite und die Absorptionskante einschließt; und
Verarbeiten der ersten und zweiten Röntgenabsorptionsspektren, um ein drittes Röntgenabsorptionsspektrum zu erzeugen, in dem das zweite Röntgenabsorptionsspektrum innerhalb der ersten Energiebandbreite, die dem ersten Röntgenabsorptionsspektrum entspricht, unter Verwendung des ersten Röntgenabsorptionsspektrums verfeinert wird.

2. Verfahren nach Anspruch 1, ferner umfassend das Fokussieren des Röntgenstrahls auf das Objekt unter Verwendung mindestens einer kapillarreflektierenden Röntgenfokussieroptik, wobei die Energiebandbreite die Absorptionskante einschließt und Energien von mehr als 100 eV oberhalb der Absorptionskante aufweist.

3. Verfahren nach Anspruch 1, wobei der Einkristallspektrometer ein Einkristall umfasst, der mindestens in der Dispersionsebene gekrümmt ist, wobei die Erfassung des ersten Röntgenabsorptionsspektrums optional die Verwendung eines räumlich auflösenden Detektors umfasst, um Röntgenstrahlen zu detektieren, die durch den Einkristall zerstreut werden, während sich das Objekt, der Einkristall und der räumlich auflösende Detektor in einer Off-Rowland-Kreis-Geometrie befinden.

4. Verfahren nach Anspruch 1, ferner umfassend:
Auswählen des Atomelements im Inneren; und
Identifizieren einer Absorptionskanten-Röntgenenergie des genannten Atomelements zur Durchführung einer Röntgenabsorptionsspektroskopie-Messung.

5. Verfahren nach Anspruch 1, wobei das Mosaikkristallspektrometer einen Mosaikkristall umfasst, der mindestens in der sagittalen Richtung der Zerstreuung gekrümmt ist, und das Erfassen des zweiten Röntgenabsorptionsspektrums die Verwendung eines räumlich auflösenden Röntgendetektors umfasst, um Röntgenstrahlen zu erfassen, die durch den Mosaikkristall gestreut werden, während sich der Mosaikkristall und der räumlich auflösende Detektor in einer Von Hamos-Geometrie befinden.

6. Verfahren nach Anspruch 1, wobei:
das erste Röntgenabsorptionsspektrum mindestens einen Teil eines Röntgenabsorptionsspektrums mit naher Kantenstruktur (XANES) enthält; und/oder
das zweite Röntgenabsorptionsspektrum mindestens erweiterte Röntgenabsorptionsfeinstrukturdaten (EXAFS) enthält.

7. System zum Durchführen von Röntgenabsorptionsspektroskopie, wobei das System umfasst:
eine Röntgenquelle (80);
eine Halterung (244), die so konfiguriert ist, dass sie ein zu untersuchendes Objekt (240) trägt;
mindestens eine fokussierende Röntgenoptik (3000), die so konfiguriert ist, dass sie Röntgenstrahlen von der Röntgenquelle mit einer Energiebandbreite von mehr als 0,1 % einer Röntgenenergie sammelt, die einer Absorptionskante eines in dem Objekt nachzuweisenden Atomelements entspricht, wobei die Energiebandbreite die Röntgenenergie einschließt, die der Absorptionskante entspricht, wobei die mindestens eine fokussierende Röntgenoptik ferner so konfiguriert ist, dass sie einen Teil der gesammelten Röntgenstrahlen auf einen Brennpunkt mit einer Fokusgröße von weniger als 500 Mikrometern fokussiert;
mindestens ein Spektrometer (3700), umfassend:
mindestens einen Einkristall (3710), der mindestens in der Zerstreuungsrichtung gekrümmt ist und eine ersten Energieauflösung von besser als 3 eV über eine erste Energiebandbreite einschließlich der Absorptionskante aufweist;
mindestens einen Mosaikkristall (3733), der eine zweite Energieauflösung aufweist, die gröber ist als die erste Energieauflösung über eine zweite Energiebandbreite, die größer ist als die erste Energiebandbreite; und
mindestens einen räumlich auflösenden Röntgendetektor (290), der konfiguriert ist, um Röntgenstrahlen zu detektieren, die durch das Objekt übertragen werden.

8. System nach Anspruch 7, wobei eine reflektierende Oberfläche der mindestens einen fokussierenden Röntgenoptik mehrschichtige Beschichtungen umfasst.

9. System nach Anspruch 7, ferner umfassend:
ein Mittel zum Positionieren des Brennflecks, des mindestens einen Einkristalls und des mindestens einen räumlich auflösenden Röntgendetektors in einer Off-Rowland-Kreis-Geometrie zur parallelen Detektion;
ein Mittel zum Positionieren des Brennflecks, des mindestens einen Mosaikkristalls und des mindestens einen räumlich auflösenden Röntgendetektors in einer Von-Hamos-Geometrie; und
ein Verarbeitungssystem, das so konfiguriert ist, dass es ein Einkristall-Röntgenabsorptionsspektrum, das mit dem mindestens einen Einkristall erhalten wurde, und ein Mosaikkristall-Röntgenabsorptionsspektrum, das mit dem mindestens einen Mosaikkristall erhalten wurde, normalisiert und ausrichtet, um ein kombiniertes Röntgenabsorptionsspektrum zu erzeugen, in dem das Mosaikkristall-Röntgenabsorptionsspektrum innerhalb einer dem Einkristall-Röntgenabsorptionsspektrum entsprechenden Energiebandbreite unter Verwendung des Einkristall-Röntgenabsorptionsspektrums verfeinert wird.

10. System nach Anspruch 9, wobei
das Einkristall-Röntgenabsorptionsspektrum eine Energieauflösung von besser als 3 eV über eine Energiebandbreite von 10 eV bis 100 eV aufweist; oder
das Mosaikkristall-Röntgenabsorptionsspektrum eine Energieauflösung gröber als 3 eV über eine Energiebandbreite von über 100 eV aufweist.

11. System nach Anspruch 7, wobei die mindestens eine fokussierende Röntgenoptik eine Kapillar-Röntgenoptik mit einer inneren reflektierenden Oberfläche umfasst, wobei mindestens ein Teil der inneren reflektierenden Oberfläche ein Abschnitt einer Quadrik-Oberfläche ist, wobei der Abschnitt der inneren reflektierenden Oberfläche optional mit einem Material mit einer Ordnungszahl größer als 26 beschichtet ist und axial symmetrisch ist.

12. System nach Anspruch 11, ferner umfassend eine Blende, die so konfiguriert ist, dass sie selektiv Röntgenstrahlen durchlässt, die durch das Objekt hindurchgehen, während sie keine Fluoreszenz-Röntgenstrahlen von dem Objekt durchlässt, wobei die Blende optional am oder in der Nähe des Brennpunkts der fokussierenden Röntgenoptik angeordnet ist.

13. System nach Anspruch 7 oder 9, wobei die Röntgenquelle eine Vielzahl von Röntgentargetmaterialien und einen Elektronenstrahlgenerator umfasst, der so konfiguriert ist, dass er einen Elektronenstrahl erzeugt und ein ausgewähltes Röntgentargetmaterial aus der Vielzahl von Röntgentargetmaterialien mit dem Elektronenstrahl beschießt, wobei die Röntgenquelle ferner optional einen Mechanismus zur Änderung der relativen Position der Vielzahl von Röntgenzielmaterialien und des Elektronenstrahls umfasst.

14. System nach Anspruch 9, wobei das Mittel zum Positionieren des Brennflecks, des mindestens einen Einkristalls und des mindestens einen räumlich auflösenden Röntgendetektors in einer Off-Rowland-Kreis-Geometrie ferner ein Mittel zur Änderung eines Abstands zwischen dem Brennfleck und dem mindestens einen Einkristall umfasst, um die Energiebandbreite des Einkristall-Röntgenabsorptionsspektrums auszuwählen.

15. System nach einem der Ansprüche 7 bis 14, wobei der mindestens eine Einkristall einen Johansson-Kristall umfasst.

## Revendications

1. Procédé de réalisation d'une spectroscopie d'absorption des rayons X, le procédé comprenant les étapes consistant à :
éclairer un objet à l'aide d'un faisceau de rayons X dont la bande passante énergétique est supérieure à 0,1 % et incluant l'énergie correspondant à un bord d'absorption d'un élément atomique ;
acquérir un premier spectre d'absorption des rayons X de l'objet à une première résolution énergétique meilleure que 3 eV, à l'aide d'un spectromètre à monocristal, sur une première bande passante énergétique incluant le bord d'absorption ;
acquérir un deuxième spectre d'absorption des rayons X de l'objet à l'aide d'un spectromètre à cristal mosaïque à une deuxième résolution en énergie plus grossière que la première résolution en énergie et sur une deuxième bande passante énergétique plus large que la première bande passante énergétique et incluant ledit bord d'absorption ; et
traiter le premier et le deuxième spectre d'absorption des rayons X pour produire un troisième spectre d'absorption des rayons X dans lequel le deuxième spectre d'absorption des rayons X dans la première bande passante énergétique correspondant au premier spectre d'absorption des rayons X est affiné à l'aide du premier spectre d'absorption des rayons X.

2. Procédé selon la revendication 1, comprenant en outre la focalisation du faisceau de rayons X sur l'objet à l'aide d'au moins une optique capillaire réfléchissante de focalisation des rayons X, la bande passante énergétique incluant ledit bord d'absorption et ayant des énergies supérieures à 100 eV au-dessus du bord d'absorption.

3. Procédé selon la revendication 1, dans lequel le spectromètre à monocristal comprend un monocristal incurvé au moins dans le plan de dispersion, dans lequel facultativement l'acquisition du premier spectre d'absorption des rayons X comprend l'utilisation d'un détecteur à résolution spatiale pour détecter des rayons X dispersés par le monocristal alors que l'objet, le monocristal et le détecteur à résolution spatiale sont dans une géométrie hors du cercle de Rowland.

4. Procédé selon la revendication 1, comprenant en outre les étapes consistant à :
sélectionner l'élément atomique à l'intérieur ; et
identifier une énergie des rayons X de bord d'absorption dudit élément atomique pour effectuer une mesure par spectroscopie d'absorption des rayons X.

5. Procédé selon la revendication 1, dans lequel le spectromètre à cristal mosaïque comprend un cristal mosaïque incurvé au moins dans la direction sagittale de dispersion, et l'acquisition du deuxième spectre d'absorption des rayons X comprend l'utilisation d'un détecteur de rayons X à résolution spatiale pour détecter des rayons X dispersés par le cristal mosaïque alors que le cristal mosaïque et le détecteur à résolution spatiale sont dans une géométrie de Von Hamos.

6. Procédé selon la revendication 1, dans lequel :
le premier spectre d'absorption des rayons X contient au moins une partie d'un spectre d'absorption des rayons X à structure de bord proche (XANES) ; et/ou
le deuxième spectre d'absorption des rayons X contient au moins des données de structure fine d'absorption des rayons X étendue (EXAFS).

7. Système de spectroscopie d'absorption des rayons X, le système comprenant :
une source de rayons X (80) ;
une fixation (244) configurée pour supporter un objet (240) à examiner ;
au moins une optique de focalisation des rayons X (3000) configurée pour collecter les rayons X de ladite source de rayons X avec une bande passante énergétique supérieure à 0,1 % d'une énergie de rayons X correspondant à un bord d'absorption d'un élément atomique à détecter dans l'objet, la bande passante énergétique incluant l'énergie de rayons X correspondant au bord d'absorption, l'au moins une optique de focalisation des rayons X étant en outre configurée pour focaliser une partie des rayons X collectés sur une tache focale avec une taille de focalisation inférieure à 500 micromètres ;
au moins un spectromètre (3700) comprenant :
au moins un monocristal (3710) incurvé au moins dans la direction de dispersion et ayant une première résolution énergétique meilleure que 3 eV sur une première bande passante énergétique incluant le bord d'absorption ;
au moins un cristal mosaïque (3733) ayant une deuxième résolution énergétique plus grossière que la première résolution énergétique sur une deuxième bande passante énergétique plus large que la première bande passante énergétique ; et
au moins un détecteur de rayons X à résolution spatiale (290) configuré pour détecter les rayons X transmis à travers l'objet.

8. Système selon la revendication 7, dans lequel une surface réfléchissante de l'au moins une optique de focalisation des rayons X comprend des revêtements multicouches.

9. Système selon la revendication 7, comprenant en outre :
un moyen de positionner le point focal, l'au moins un monocristal, et l'au moins un détecteur de rayons X à résolution spatiale dans une géométrie hors du cercle de Rowland pour une détection parallèle ;
un moyen de positionner le point focal, l'au moins un cristal mosaïque et l'au moins un détecteur de rayons X à résolution spatiale dans une géométrie de Von Hamos ; et
un système de traitement configuré pour normaliser et aligner un spectre d'absorption des rayons X monocristallin obtenu avec l'au moins un monocristal et un spectre d'absorption des rayons X de cristal-mosaïque obtenus avec l'au moins un cristal mosaïque pour produire un spectre d'absorption des rayons X combiné dans lequel le spectre d'absorption des rayons X de cristal-mosaïque dans une bande passante énergétique correspondant au spectre d'absorption des rayons X monocristallin est affiné à l'aide du spectre d'absorption des rayons X monocristallin.

10. Système selon la revendication 9, dans lequel
le spectre d'absorption des rayons X monocristallin a une résolution en énergie meilleure que 3 eV sur une bande passante énergétique de 10 eV à 100 eV ; ou
le spectre d'absorption des rayons X de cristal-mosaïque a une résolution en énergie plus grossière que 3 eV sur une bande passante énergétique de plus de 100 eV.

11. Système selon la revendication 7, dans lequel l'au moins une optique de focalisation des rayons X comprend une optique capillaire à rayons X ayant une surface réfléchissante intérieure, dans lequel au moins une partie de la surface réfléchissante intérieure est une partie d'une surface quadrique, facultativement dans lequel la partie de la surface réfléchissante intérieure est recouverte d'un matériau dont le numéro atomique est supérieur à 26 et qui est axialement symétrique.

12. Système selon la revendication 11, comprenant en outre une ouverture configurée pour laisser passer sélectivement les rayons X transmis à travers l'objet tout en ne laissant pas passer les rayons X de fluorescence provenant de l'objet, dans lequel l'ouverture étant facultativement placée au point focal de l'optique de focalisation des rayons X ou à proximité de celui-ci.

13. Système selon la revendication 7 ou selon la revendication 9, dans lequel la source de rayons X comprend une pluralité de matériaux cibles de rayons X et un générateur de faisceau d'électrons configuré pour générer un faisceau d'électrons et pour bombarder un matériau cible de rayons X sélectionné parmi la pluralité de matériaux cibles de rayons X avec le faisceau d'électrons, dans lequel la source de rayons X comprend en outre facultativement un mécanisme pour modifier la position relative de la pluralité de matériaux cibles de rayons X et du faisceau d'électrons.

14. Système selon la revendication 9, dans lequel le moyen de positionner le point focal, l'au moins un monocristal et l'au moins un détecteur de rayons X à résolution spatiale dans une géométrie hors du cercle de Rowland comprend en outre un moyen de modifier une distance entre le point focal et l'au moins un monocristal pour sélectionner la bande passante énergétique du spectre d'absorption des rayons X monocristallin.

15. Système selon l'une quelconque des revendications 7 à 14, dans lequel l'au moins un monocristal comprend un cristal de Johansson.
